(19) Europäisches Patentamt
European Patent Office
Office européen des brevets

(11) EP 2 572 803 B1

(12) EUROPEAN PATENT SPECIFICATION

(45) Date of publication and mention of the grant of the patent:
**29.01.2014 Bulletin 2014/05**

(51) Int Cl.:
***B05D 5/10*** *(2006.01)* ***C09J 7/00*** *(2006.01)*
***C09J 7/02*** *(2006.01)*

(21) Application number: **12185123.2**

(22) Date of filing: **20.09.2012**

(54) **Acrylic pressure-sensitive adhesive composition, acrylic pressure-sensitive adhesive layer, and acrylic pressure-sensitive adhesive tape**

Druckempfindliche Akrylhaftmittelzusammensetzung, druckempfindliche Akrylhaftschicht und druckempfindliches Akrylhaftband

Composition acrylique adhésive sensible à la pression, couche adhésive sensible à la pression acrylique et ruban adhésif sensible à la pression acrylique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.09.2011 JP 2011208054**
**22.09.2011 JP 2011208055**
**19.06.2012 JP 2012138241**
**19.06.2012 JP 2012138242**

(43) Date of publication of application:
**27.03.2013 Bulletin 2013/13**

(73) Proprietor: **Nitto Denko Corporation**
**Ibaraki-shi,**
**Osaka 567-8680 (JP)**

(72) Inventors:
- **Okamoto, Masayuki**
  **Ibaraki-shi, Osaka 567-8680 (JP)**
- **Shigetomi, Kiyoe**
  **Ibaraki-shi, Osaka 567-8680 (JP)**
- **Yamagata, Masato**
  **Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(56) References cited:
**US-A1- 2010 255 297**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 572 803 B1

## Description

The present invention relates to an acrylic pressure-sensitive adhesive tape having an acrylic pressure-sensitive adhesive layer.

Because acrylic pressure-sensitive adhesive tapes each having an acrylic pressure-sensitive adhesive layer are excellent in adhesiveness, such as pressure-sensitive adhesive force, resistance to resilience, and holding property (cohesive force), and further excellent in aging resistance, such as heat resistance, light resistance, weatherability, and oil resistance, the acrylic pressure-sensitive adhesive tapes have been conventionally used in wide applications. In particular, the acrylic pressure-sensitive adhesive tapes having such properties have been widely used as joining materials in various industrial fields, such as home electronic appliances, building materials, and automobile interior and exterior materials. Accordingly, the acrylic pressure-sensitive adhesive tapes are required to be adhered, with high reliability, to various adherends (objects to be joined) including: metallic materials, such as stainless steel and aluminum; various plastic materials, such as polyethylene, polypropylene, polystyrene, ABS, (meth)acrylic resin, and polycarbonate resin; and glass materials.

A method of adding a tackifying resin (tackifier) to an acrylic pressure-sensitive adhesive composition that forms an acrylic pressure-sensitive adhesive layer is known as a method of enhancing the adhesiveness of an acrylic pressure-sensitive adhesive tape to an adherend. Patent Documents 1 and 2 disclose acrylic pressure-sensitive adhesive compositions in each of which rosin or a hydrogenated petroleum resin has been added, as a tackifying resin, to an acrylic polymer.

Patent Documents

[Patent Document 1] Japanese Patent Application Publication No. 1994-207151
[Patent Document 2] Japanese Patent Application Publication (Translation of PCT Application) No. 1999-504054

Acrylic pressure-sensitive adhesive tapes are always required to have improved adhesiveness to adherends. In particular, it is strongly required that acrylic pressure-sensitive adhesive tapes should have improved adhesiveness to adherends having low polarity represented by polyolef in resins, such as polyethylene and polypropylene, which are frequently used for home electric appliances, building materials, and automobile interior and exterior materials, etc. On the other hand, there are sometimes the cases where the aforementioned acrylic pressure-sensitive adhesive composition to which a tackifying resin, such as rosin, has been added does not sufficiently meet the demand that the adhesiveness of an acrylic pressure-sensitive adhesive tape to an adherend having low polarity should be improved. In addition, a terpene resin has sometimes been used as a tackifying resin, however, the compatibility thereof with an acrylic polymer is insufficient, and accordingly there have sometimes been the cases where the adhesion reliability is deteriorated.

The present invention has been made in view of these situations, and a purpose of the invention is to provide a technique for improving the adhesiveness of an acrylic pressure-sensitive adhesive tape, such as pressure-sensitive adhesive force, resistance to resilience, and holding property (cohesive force).

An acrylic pressure-sensitive adhesive tape according to an embodiment of the present invention comprises a core layer and a surface layer provided on one or both surfaces of the core layer, in which the core layer contains an acrylic polymer (A) and the surface layer contains 100 parts by mass of an acrylic polymer (B) and 1 to 70 parts by mass of a (meth) acrylic polymer (C) that has a weight average molecular weight of 1000 or more and less than 30000 and that has a terpene structure in its side chain.

According to the acrylic pressure-sensitive adhesive tape of this embodiment, the adhesiveness to adherends including adherends having low polarity can be improved.

In the acrylic pressure-sensitive adhesive tape according to the aforementioned embodiment, the core layer may further contain a fine particle (D) and a bubble (E).

Also, the glass transition temperature of the (meth) acrylic polymer (C) may be 0°C or higher to 300°C or lower. The (meth) acrylic polymer (C) may also contain, in the whole monomers and as a monomer unit, 10% by mass or more to 100% by mass or less of a (meth) acrylic monomer having a terpene structure. The acrylic polymer (B) may contain, as a monomer unit, at least one type of monomer selected from the group consisting of N-vinyl cyclic amides, represented by the acrylic (1) described in the following general formula, and carboxyl group-containing monomers:

[Formula 1]

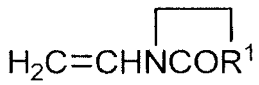 (1)

wherein, $R^1$ is a divalent organic group.

Also, the surface layer may contain 40 to 90% by mass of a solvent-insoluble component.

Embodiments will now be described, by way of example only, with reference to the accompanying drawing, which is meant to be exemplary, not limiting, in which:

Fig. 1 is a schematic sectional view illustrating the structure of an acrylic pressure-sensitive adhesive tape according to an embodiment.

The invention will now be described by reference to the preferred embodiments. This does not intend to limit the scope of the present invention, but to exemplify the invention.

(Embodiment 1)

Fig. 1 is a schematic sectional view illustrating the structure of an acrylic pressure-sensitive adhesive tape according to Embodiment 1. The acrylic pressure-sensitive adhesive tape 10 comprises: a core layer 20; a surface layer 30a provided on one surface of the core layer 20; and a surface layer 30b provided on the other surface of the core layer 20. Hereinafter, the surface layers 30a and 30b are appropriately and collectively referred to as a surface layer 30.

(Core Layer)

The core layer 20 contains an acrylic polymer (A), and if necessary, a fine particle (D) and a bubble (E). Hereinafter, each component of the core layer 20 will be described in detail.

[Acrylic Polymer (A)]

The acrylic polymer (A), a pressure-sensitive adhesive composition that forms the core layer 20, contains, as a monomer unit, 50% by mass or more of a (meth)acrylic acid alkyl ester having, for example, a linear or branched-chain $C_{1-20}$ alkyl group. The acrylic polymer (A) may have a structure in which the (meth) acrylic acid alkyl ester having a $C_{1-20}$ alkyl group is used alone or in combination of two or more thereof. The acrylic polymer (A) can be obtained by polymerizing (for example, solution polymerization, emulsion polymerization, or UV polymerization) the (meth)acrylic acid alkyl ester along with a polymerization initiator.

The ratio of the (meth)acrylic acid alkyl ester having a $C_{1-20}$ alkyl group is 50% by mass or more to 99.9% by mass or less, preferably 60% by mass or more to 98% by mass or less, and more preferably 70% by mass or more to 95% by mass or less, based on the total mass of the monomer components for preparing the acrylic polymer (A).

Examples of the (meth) acrylic acid alkyl ester having a $C_{1-20}$ alkyl group include, for example: (meth) acrylic acid $C_{1-20}$ alkyl esters [preferably (meth) acrylic acid $C_{2-14}$ alkyl esters, more preferably (meth)acrylic acid $C_{2-10}$ alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth) acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth) acrylic acid nonadecyl, and (meth) acrylic acid eicosyl. In addition, the (meth) acrylic acid alkyl ester means an acrylic acid alkyl ester and/or a methacrylic acid alkyl ester, and all of the " (meth) ..." expressions have the same meaning.

For the purpose of modifying cohesive force, heat resistance, and cross-linking property, etc., the acrylic polymer (A) may contain, if necessary, another monomer component (copolymerizable monomer) that is copolymerizable with the (meth)acrylic acid alkyl ester. Accordingly, the acrylic polymer (A) may contain a copolymerizable monomer along with the (meth) acrylic acid alkyl ester as a major component. A monomer having a polar group can be preferably used as the copolymerizable monomer.

Specific examples of the copolymerizable monomer include: carboxyl group-containing monomers, such as

acrylic acid, methacrylic acid, carboxy ethyl acrylate, carboxy pentylacrylate, itaconic acid, maleic acid, fumaric acid, crotonic acid, and isocrotonic acid; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl) methyl methacrylate; acid anhydride group-containing monomers, such as maleic acid anhydride and itaconic acid anhydride; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl (meth)acrylate, and (meth)acryloyloxy naphthalenesulfonic acid; phosphate group-containing monomers, such as 2-hydroxyethyl acryloyl phosphate; (N-substituted)amide monomers, such as N,N-dialkyl(meth)acrylamides including (meth)acrylamide, N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(t-butyl)(meth)acrylamide, N-ethyl(meth)acrylamide, N-isopropyl(meth)acrylamide, N-butyl(meth)acrylamide, N-n-butyl(meth)acrylamide, N-methylol(meth)acrylamide, N-ethylol (meth) acrylamide, N-methylol propane(meth)acrylamide, N-methoxymethyl(meth)acrylamide, N-methoxyethyl(meth)acrylamide, N-butoxymethyl(meth)acrylamide, and N-acryloylmorpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexylmaleimide, N-isopropylmaleimide, N-laurylmaleimide, and N-phenylmaleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinyl morpholine, N-vinyl-2-piperidone, N-vinyl-3-morpholine, N-vinyl-2-caprolactam, N-vinyl-1,3-oxazine-2-one, N-vinyl-3,5-morpholine dione; N-vinylpyrazole, N-vinyl isoxazole, N-vinylthiazole, N-vinylisothiazole, and N-vinylpyridazine; N-vinyl carboxylic acid amides; lactam monomers, such as N-vinyl caprolactam; cyanoacrylate monomers, such as acrylonitrile and methacrylonitrile; (meth) acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; (meth)acrylic acid alkoxy alkyl monomers, such as (meth)acrylic acid methoxyethyl, (meth)acrylic acid ethoxyethyl, (meth)acrylic acid propoxyethyl, (meth)acrylic acid butoxyethyl, and (meth)acrylic acid ethoxypropyl; styrene monomers, such as styrene and $\alpha$-methylstyrene; epoxy group-containing acrylic monomers, such as (meth)acrylic acid glycidyl; glycol acrylic ester monomers, such as (meth)acrylic acid polyethylene glycol, (meth)acrylic acid polypropylene glycol, (meth)acrylic acid methoxy ethylene glycol, and (meth)acrylic acid methoxy polypropylene glycol; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; vinyl esters, such as vinyl acetate and vinyl propionate aromatic vinyl compounds, such as vinyl toluene and styrene; olefins or dienes, such as ethylene, butadiene, isoprene, and isobutylene; vinyl ethers, such as vinyl alkyl ether; vinyl chloride; sulfonic acid group-containing monomers, such as vinyl sulfonate sodium; imide group-containing monomers, such as cyclohexyl maleimide and isopropyl maleimide; isocyanate group-containing monomers, such as 2-isocyanate ethyl(meth)acrylate; (meth)acrylic acid esters having an alicyclic hydrocarbon group, such as cyclopentyl (meth) acrylate, cyclohexyl(meth)acrylate, and isobornyl(meth)acrylate; (meth) acrylic acid esters having an aromatic hydrocarbon group, such as phenyl(meth)acrylate; and (meth)acrylic acid esters obtained from terpene compound derivative alcohols. These copolymerizable monomers can be used alone or in combination of two or more thereof.

When the acrylic polymer (A) contains a coplymerizable monoer along with a (meth)alkyl acid alkyl ester as a major component, carboxyl group-containing monomers can be preferably used. Among them, an acrylic acid can be preferably used. The use amount of the copolymerizable monomer is not particularly limited, but the copolymerizable monomer can be usually contained in an amount within a range of 0.1 to 40% by mass, preferably within a range of 0.5 to 30% by mass, and more preferably within a range of 1 to 20% by mass, based on the total mass of the monomer components for preparing the acrylic polymer (A).

By containing the copolymerizable monomer in an amount of 0.1% by mass or more, a decrease in the cohesive force of the acrylic pressure-sensitive adhesive that forms the core layer 20 can be prevented and high shear force can be obtained. Further, by containing the copolymerizable monomer in an amount of 40% by mass or less, it can be prevented that the cohesive force of the acrylic pressure-sensitive adhesive that forms the core layer 20 may become too large and the tackiness at normal temperature (25°C) can be improved.

The acrylic polymer (A) may also contain, if necessary, a polyfunctional monomer, in order to adjust the cohesive force of the acrylic pressure-sensitive adhesive tape.

Examples of the polyfunctional monomer include, for example: (poly)ethylene glycol di(meth)acrylate, (poly) propylene glycol di(meth)acrylate, neopentyl glycol di(meth)acrylate, pentaerythritol di(meth)acrylate, pentaerythritol tri (meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc. Among them, trimethylolpropane tri(meth)acrylate, hexanediol di(meth)acrylate, and dipentaerythritol hexa(meth)acrylate can be preferably used. The polyfunctional (meth)acrylates can be used alone or in combination of two or more thereof.

The use amount of the polyfunctional monomer is changed depending on the molecular weight or the number of functional groups thereof, but the polyfunctional monomer is added in an amount within a range of 0.01 to 3.0% by mass, preferably within a range of 0.02 to 2.0% by mass, and more preferably within a range of 0.03 to 1.0% by mass, based on the total mass of the monomer components for preparing the acrylic polymer (A).

If the use amount of the polyfunctional monomer is more than 3.0% by mass based on the total mass of the monomer components for preparing the acrylic polymer (A), for example, the cohesive force of the acrylic pressure-sensitive adhesive that forms the core layer 20 may become too large and accordingly there are sometimes the cases where the adhesive force is decreased. On the other hand, if the use amount thereof is less than 0.01% by mass, for example, there are sometimes the cases where the cohesive force of the acrylic pressure-sensitive adhesive that forms the core layer 20 is decreased.

<Polymerization Initiator>

In preparing the acrylic polymer (A), the acrylic polymer (A) can be easily formed by a curing reaction using heat or ultraviolet rays with the use of a polymerization initiator, such as a thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators (for example, 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine)dihydrochloride, etc.); peroxide polymerization initiators (for example, dibenzoyl peroxide, t-butyl permaleate, and lauroyl peroxide, etc.); and redox polymerization initiators, etc.

The use amount of the thermal polymerization initiator is not particularly limited, and only has to be within a conventional range in which it can be used as a thermal polymerization initiator.

The photo-polymerization initiator is not particularly limited, but, for example, a benzoin ether photo-polymerization initiator, acetophenone photo-polymerization initiator, $\alpha$-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, acylphosphine oxide photo-polymerization initiator, or the like, can be used.

Specific examples of the benzoin ether photo-polymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [product name: IRGACURE 651, made by BASF], and anisole methyl ether, etc. Specific examples of the acetophenone photo-polymerization initiator include, for example: 1-hydroxycyclohexyl phenyl ketone [product name: IRGACURE 184, made by BASF], 4-phenoxydichloroacetophenone, 4-t-butyl-dichloroacetophenone, 1-[4-(2-hydroxyethoxy)-phenyl]-2-hydroxy-2-methyl-1-propane-1- one [product name: IRGACURE 2959, made by BASF], 2-hydroxy-2-methyl-1-phenyl-propane-1-one [product name: DAROCUR 1173, made by BASF], and methoxy acetophenone, etc. Specific examples of the $\alpha$-ketol photo-polymerization initiator include, for example: 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,1-propanedione-2-(o-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and $\alpha$-hydroxy cyclohexyl phenyl ketone, etc. Specific examples of the ketal photo-polymerization initiator include, for example, benzyl dimethyl ketal, etc. Specific examples of the thioxanthone photo-polymerization initiator include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone, etc.

Examples of the acylphosphine photo-polymerization initiator include, for example:

bis(2,6-dimethoxybenzoyl)phenylphosphine oxide,
bis(2,6-dimethoxybenzoyl)(2,4,4-trimethylpentyl) phosphine oxide, bis(2,6-dimethoxybenzoyl)-n-butyl phosphine oxide,
bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide,
bis(2,6-dimethoxybenzoyl)octylphosphine oxide,
bis(2-methoxybenzoyl)(2-methylpropane-1-yl)phosphine oxide,
bis(2-methoxybenzoyl)(1-methylpropane-1-yl)phosphine oxide,
bis(2,6-diethoxybenzoyl)(2-methylpropane-1-yl)phosphine oxide,
bis(2,6-diethoxybenzoyl)(1-methylpropane-1-yl) phosphine oxide,
bis(2,6-dibutoxybenzoyl)(2-methylpropane-1-yl) phosphine oxide,
bis(2,4-dimethoxybenzoyl)(2-methypropane-1-yl) phosphine oxide,
bis(2,4,6-trimethylbenzoyl)(2,4-dipentoxyphenyl) phosphine oxide, bis(2,6-dimethoxybenzoyl)benzyl phosphine oxide,
bis(2,6-dimethoxybenzoyl)-2-phenylpropyl phosphine oxide,
bis(2,6-dimethoxybenzoyl)-2-phenylethyl phosphine oxide,
bis(2,6-dimethoxybenzoyl)benzyl phosphine oxide,
bis(2,6-dimethoxybenzoyl)-2-phenylpropyl phosphine oxide,
bis(2,6-dimethoxybenzoyl)-2-phenylethyl phosphine oxide, 2,6-dimethoxybenzoyl benzylbutylphosphine oxide,
2,6-dimethoxybenzoyl benzyloctylphosphine oxide,
bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide,
bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide,
bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide,
bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide, etc.

The use amount of the photo-polymerization initiator is not particularly limited, but the photo-polymerization initiator is combined, for example, in an amount within a range of 0.01 to 5 parts by mass, and preferably within a range of 0.05 to 3 parts by mass, based on 100 parts by mass of the monomer components for preparing the acrylic polymer (A).

If the use amount of the photo-polymerization initiator is less than 0.01 parts by mass, there are sometimes the cases where a polymerization reaction becomes insufficient. If the use amount thereof is more than 5 parts by mass, there are sometimes the cases where an ultraviolet ray does not reach the inside of the pressure-sensitive adhesive layer, because the photo-polymerization initiator absorbs an ultraviolet ray. In this case, a decrease in the rate of polymerization is caused, or the molecular weight of the generated polymer becomes small. Thereby, the cohesive force of the acrylic pressure-sensitive adhesive that forms the core layer 20 becomes small, and hence there are sometimes the cases where, when the film is peeled off from the core layer 20, part of the acrylic pressure-sensitive adhesive remains on the film and accordingly the film cannot be reused. The photo-polymerization initiators may be used alone or in combination of two or more thereof.

In order to adjust the cohesive force, a cross-linking agent can also be used, other than the aforementioned polyfunctional monomers. Commonly-used cross-linking agents can be used as the cross-linking agent. Examples of the cross-linking agents include, for example: an epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. In particular, an isocyanate cross-linking agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such astrimethylolpropane. Alternatively, a compound having, in one molecule, at least one isocyanate group and one or more unsaturated bonds, specifically 2-isocyanate ethyl(meth)acrylate, etc., can also be used as the isocyanate cross-linking agent.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl

ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl)cyclohexane, etc.

In the present embodiment, the acrylic polymer (A) can also be prepared as a partial polymer (acrylic polymer syrup) that can be obtained by radiating ultraviolet (UV) rays onto a mixture in which the aforementioned monomer components and the polymerization initiator have been combined, so that the monomer component is partially polymerized. The weight average molecular weight (Mw) of the acrylic polymer (A) is, for example, within a range of 30000 to 5000000.

[Fine Particle (D)]

In the present embodiment, fine particles (D) can be added to the acrylic polymer (A) that forms the core layer. The fine particle (D) has operational effects of improving the shear adhesive force and processability of the acrylic pressure-sensitive adhesive tape.

Examples of the fine particles (D) include: metallic particles, such as copper, nickel, aluminum, chromium, iron, and stainless steel, and metal oxide particles thereof; carbide particles, such as silicon carbide, boron carbide, and carbon nitride; nitride particles, such as aluminum nitride, silicon nitride, and boron nitride; ceramic particles represented by oxides, such as glass, alumina, and zirconium; inorganic fine particles, such as calcium carbide, aluminum hydroxide, glass, and silica; natural material particles, such as volcanic Shirasu and sand; polymer particles of polystyrene, polymethyl methacrylate, phenol resin, benzoguanamine resin, urea resin, silicone resin, nylon, polyester, polyurethane, polyethylene, polypropylene, polyamide, and polyimide, etc.; organic hollow bodies of vinylidene chloride and acrylic, etc.; and organic spheres, such as nylon bead, acrylic bead, and silicone bead.

Hollow fine particles can be preferably used as the fine particle (D). Among hollow fine particles, hollow inorganic fine particles can be preferably used in terms of the efficiency of the polymerization using an ultraviolet reaction and weight. Examples of the hollow inorganic fine particles include: glass microspheres, such as hollow glass microspheres; hollow balloons made of a metallic compound, such as hollow alumina microspheres; and hollow microspheres made of porcelain, such as hollow ceramic microspheres. By using the aforementioned hollow glass microspheres, the high-temperature adhesive force of the acrylic pressure-sensitive adhesive tape can be improved without impairing other properties such as shear force and holding force.

Examples of the hollow glass microspheres include, for example, ones: with a product name of Glass Microballoon (made by FUJI SILYSIA CHEMICAL LTD.); with product names of CEL-STAR Z-20, CEL-STAR Z-27, CEL-STAR CZ-31T, CEL-STAR Z-36, CEL-STAR Z-39, CEL-STAR T-36, and CEL-STAR PZ-6000 (each of them is made by Tokai Kogyo Co., Ltd.); and with a product name of SILUX*FINE BALLOON (made by FINE-BALLOON Ltd.), etc.

The size of the fine particle (D) (average particle size) is not particularly limited, but can be selected from a range of, for example, 1 to 500 μm, preferably from a range of 5 to 200 μm, and more preferably from a range of 10 to 150 μm.

The specific gravity of the fine particle (D) is not particularly limited, but can be selected from a range of, for example, 0.1 to 1.8 $g/cm^3$, preferably from a range of 0.2 to 1.5 $g/cm^3$, and more preferably from a range of 0.2 to 0.5 $g/cm^3$.

If the specific gravity of the fine particle (D) is smaller than 0.1 $g/cm^3$, floating of the fine particles (D) becomes large when the fine particles are combined into the acrylic pressure-sensitive adhesive composition and they are mixed, and accordingly there are sometimes the cases where it is difficult to uniformly scatter the fine particles. In addition, because the strength of the glass becomes low, it will easily crack. Conversely, if the specific gravity thereof is larger than 1.8 $g/cm^3$, the transmission rate of an ultraviolet ray is decreased, and accordingly there is the fear that the efficiency of the ultraviolet reaction may be decreased. In addition, because the weight of the acrylic pressure-sensitive adhesive that forms the core layer 20 becomes large, workability becomes poor.

The use amount of the fine particles (D) is not particularly limited. If the use amount thereof is less than, for example, 10% by volume based on the whole volume of the core layer 20, the effect of the addition of the fine particles (D) is low. On the other hand, if the use amount thereof is more than 50% by volume, there are sometimes the cases where the adhesive force of the acrylic pressure-sensitive adhesive that forms the core layer 20 is decreased.

[Bubble (E)]

In the present embodiment, the bubbles (E) can be added to the acrylic polymer (A) that forms the core layer. By containing the bubbles (E) in the core layer 20, the acrylic pressure-sensitive adhesive tape 10 can exhibit good adhesiveness to a curved surface and concave-convex surface, and also exhibit good resistance to resilience.

It is desirable that the bubbles (E) contained in the core layer 20 are basically closed-cell type bubbles, but closed-cell type bubbles and interconnected-cell type bubbles may coexist.

Although the bubble (E) usually has a spherical shape (in particular, a true spherical shape), the shape does not necessarily have to have a true spherical shape and accordingly there may be concavities and convexities on the

surface. The average bubble size (diameter) of the bubble (E) is not particularly limited, but can be selected, for example, from a range of 1 to 1000 μm, preferably from a range of 10 to 500 μm, and more preferably from a range of 30 to 300 μm.

A gas component contained in the bubble (E) (gas component that forms the bubble (E); hereinafter, appropriately referred to as a bubble-forming gas) is not particularly limited, but various gas components, such as inactive gases including nitrogen, carbon dioxide, and argon, and air, can be used. When a polymerization reaction is performed in a state where a bubble-forming gas is contained, it is important that the gas that forms the bubble (E) does not hamper the reaction. Nitrogen can be preferably used as a bubble-forming gas in terms of not hampering a polymerization reaction and cost.

The amount of the bubbles (E) contained in the core layer 20 is not particularly limited, but can be appropriately selected in accordance with the application of the tape. The amount of the bubbles (E) contained in the core layer 20 is, for example, within a range of 5 to 50% by volume, and preferably within a range of 8 to 40% by volume, based on the whole volume of the core layer 20 containing the bubbles (E). If the mixing amount of the bubbles is less than 5% by volume, the effect of mixing the bubbles (E) cannot be obtained. Conversely, if the mixing amount thereof is larger than 50% by volume, the possibility that the bubbles each penetrating the core layer 20 may be present is increased, and hence there are sometimes the cases where the adhesive performance or the appearance is deteriorated.

A method of forming the core layer 20 containing the bubbles (E) is not particularly limited. The core layer 20 containing the bubbles (E) may be formed, for example, (1) by using a core layer material into which a bubble-forming gas has been mixed in advance, or (2) by mixing a foaming agent into a core layer material into which a bubble-forming gas has not been mixed. In the case of (2), the foaming agent to be used is not particularly limited, but can be appropriately selected from, for example, publicly-known foaming agents. For example, heat-expandable microspheres can be used as such a foaming agent.

<Other Components>

Besides the aforementioned components, a thickener, a thixotropic agent, and fillers, etc., may be added to the core layer 20, if necessary. Examples of the thickener include acrylic rubber, epichlorohydrin rubber, and butyl rubber, etc. Examples of the thixotropic agent include colloid silica and polyvinylpyrrolidone, etc. Examples of the fillers include calcium carbonate, titanium oxide, and clay, etc. Other than those, a plasticizer, anti-aging agent, antioxidant, etc. may be appropriately added to the core layer 20.

(Surface Layer)

The surface layer 30 contains: the acrylic polymer (B) as a pressure-sensitive adhesive composition; and the (meth) acrylic polymer (C) that has a weight average molecular weight of 1000 or more and less than 30000 and that has a terpene structure in its side chain (hereinafter, appropriately referred to as the (meth)acrylic polymer (C)) as a tackifying resin.

The content of each component in the acrylic pressure-sensitive adhesive composition contained in the surface layer 30 is described below.

Acrylic Polymer (B): 100 Parts by Mass
(Meth)Acrylic Polymer (C): 1 to 70 Parts by Mass

Hereinafter, the acrylic polymer (B) and the (meth) acrylic polymer (C) will be described in detail.

[Acrylic Polymer (B)]

The acrylic polymer (B) to be used in the surface layer 30 as a pressure-sensitive adhesive composition can be selected from the compounds (various monomer components) exemplified as the acrylic polymer (A) in the core layer 20. The acrylic polymer (B) to be used in the surface layer 30 may or may not have the similar components and composition ratio as in the acrylic polymer (A) in the core layer 20.

When the acrylic polymer (B) contains a nitrogen-containing heterocyclic monomer as a constituent unit, N-vinyl cyclic amide represented by the following general formula (1) can be exemplified as a more preferred monomer:

[Formula 2]

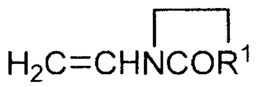
(1)

wherein, $R^1$ is a divalent organic group.

The glass transition temperature (Tg) of the acrylic polymer (B) is lower than 0°C, and preferably lower than -10°C, and usually -80°C or higher.

In the present embodiment, the acrylic polymer (B) that forms the surface layer can also be prepared as a partial polymer (acrylic polymer syrup) that can be obtained by radiating ultraviolet (UV) rays onto a mixture in which the aforementioned monomer components and the polymerization initiator have been combined, so that the monomer components are partially polymerized. An acrylic pressure-sensitive adhesive composition is prepared by combining the later-described (meth) acrylic polymer (C) into the acrylic polymer syrup, and then polymerization can also be completed by coating the pressure-sensitive adhesive composition on a predetermined object to be coated and by radiating UV rays. The weight average molecular weight (Mw) of the acrylic polymer (B) is within a range of, for example, 30000 to 5000000. In the present embodiment, the polymerization initiators described in the preparation of the acrylic polymer (A) can be appropriately used when the acrylic polymer (B) that forms the surface layer is prepared. Also, the cross-linking agents described in the preparation of the acrylic polymer (A) can be appropriately used in order to adjust the

[(Meth)Acrylic Polymer (C)]

The (meth) acrylic polymer (C) is a polymer having a weight average molecular weight smaller than that of the acrylic polymer (B), and functions as a tackifying resin and has the advantage that inhibition of polymerization is hardly caused when UV polymerization is performed. The (meth)acrylic polymer (C) contains, as a monomer unit, a (meth) acrylic acid ester having, for example, a terpene structure. Accordingly, the compatibility of the polymer with the acrylic polymer (B) is not low, different from the case of an ordinary terpene tackifying resin, and a phase separation is hardly caused, and hence the (meth) acrylic polymer (C) is excellent in adhesion reliability.

The terpene structure (terpenes) described herein generally means the compounds that are extracted from the essential oil components of plants and are based on the isoprene rule represented by a molecular formula of $C_5H_8$.

Specific examples thereof include, in terms of a terpene structure: monoterpenes, such as α-pinene, β-pinene, carene, γ-terpinene, d-limonene, dipintene, terpinolene, β-phellandrene, pyronene, camphene, and myrcene; and sesquiterpenes, such as longifolene. These compounds may be used alone or in combination of two or more thereof.

The (meth) acrylic acid ester having a terpene structure is not particularly limited, but can be appropriately obtained by using a publicly-known method. For example, it can be obtain by an esterification reaction between the corresponding terpene alcohol and the aforementioned (meth)acrylic acid. The (meth)acrylic acid ester containing the terpene structure thus obtained is not particularly limited, but can be appropriately used as a monomer unit of the (meth) acrylic polymer (C).

A (meth) acrylic acid ester having a terpene structure, the glass transition temperature (Tg) of the homopolymer of which is 0°C or lower, may be used, or that, the glass transition temperature thereof is 0°C or higher, may be used. The aforementioned monomer, the glass transition temperature (Tg) of the homopolymer of which is 0°C or lower, provides the effect of improving the tackiness of the pressure-sensitive adhesive layer. On the other hand, a monomer, in which the glass transition temperature (Tg) of the aforementioned homopolymer is higher than 0°C, provides the effect of improving durability (in particular, heat resistance). The maximum of the glass transition temperature (Tg) of the homopolymer of the (meth)acrylic acid ester having a terpene structure is approximately 180°C, and a (meth)acrylic acid ester, the glass transition temperature (Tg) of the homopolymer of which is lower than approximately 150°C, is preferably used. If the glass transition temperature (Tg) of the homopolymer is higher than 180°C, it is needed to reduce the use amount of the (meth)acrylic acid ester in order to make the glass transition temperature (Tg) of the whole base polymer to be 0°C or lower, thereby possibly causing the improvement of the adhesiveness of an acrylic pressure-sensitive adhesive tape to be difficult. Examples the (meth)acrylic acid ester having a terpene structure are shown below (the following formulae (2) to (5)).

[Formula 3]

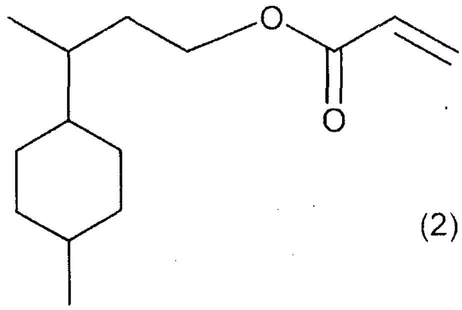

(2)

[Formula 4]

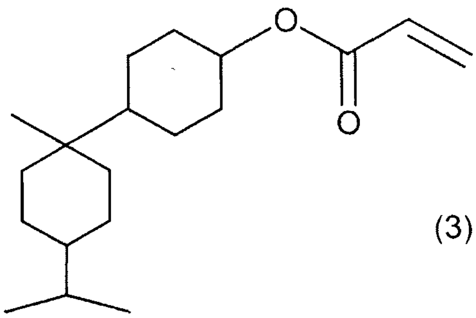

(3)

[Formula 5]

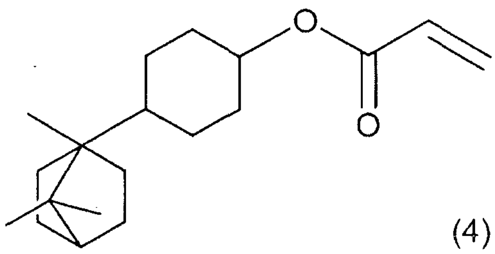

(4) HCPA

[Formula 6]

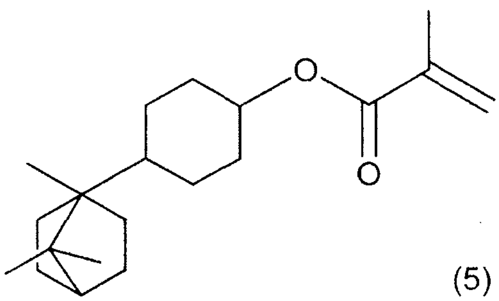

(5) HCPMA

Alternatively, the (meth)acrylic polymer (B) can be obtained by copolymerizing another monomer component (copolymerizable monomer) that is copolymerizable with the (meth) acrylic acid ester having a terpene structure, in addition to the (meth) acrylic acid ester component unit having a terpene structure.

Examples of the another monomer that is copolymerizable with the (meth)acrylic acid ester having a terpene structure include: (meth) acrylic acid esters having a $C_{1-20}$ alkyl group, such as (meth)acrylic acid methyl; (meth)acrylic acid esters having an alicyclic hydrocarbon group, such as cyclopentyl(meth)acrylate, cyclohexyl(meth)acrylate, and isobornyl(meth)acrylate; (meth)acrylic acid esters having an aromatic hydrocarbon group, such as phenyl(meth)acrylate; (meth) acrylic acid alkoxy alkyl monomers, such as (meth) acrylic acid methoxyethyl, (meth)acrylic acid ethoxyethyl, (meth) acrylic acid propoxyethyl, (meth) acrylic acid butoxyethyl, and (meth) acrylic acid ethoxypropyl; salts, such as (meth) acrylic acid alkali metal salt; di(meth)acrylic acid ester monomers of (poly)alkylene glycols, such as di(meth) acrylic acid ester of ethylene glycol, di (meth) acrylic acid ester of diethylene glycol, di(meth)acrylic acid ester of triethylene glycol, di(meth)acrylic acid ester of polyethylene glycol, di (meth) acrylic acid ester of propylene glycol, di (meth) acrylic acid ester of dipropylene glycol, and di (meth) acrylic acid ester of tripropylene glycol; poly(meth)acrylic acid ester monomers, such as trimethylolpropane tri(meth)acrylic acid ester; vinyl esters, such as vinyl acetate and vinyl propionate; halogenated vinyl compounds, such as vinylidene chloride and (meth)acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline; aziridine group-containing polymerizable compounds, such as (meth)acryloylaziridine and (meth)acrylic acid-2-aziridinylethyl; epoxy group-containing vinyl monomers, such as allyl glycidyl ether, (meth) acrylic acid glycidyl ether, and (meth)acrylic acid-2-ethyl glycidyl ether; hydroxyl group-containing vinyl monomers, such as (meth)acrylic acid-2-hydroxyethyl, (meth)acrylic acid-2-hydroxypropyl, monoesters of (meth)acrylic acids with polypropylene glycol or polyethylene glycol, and adducts of lactones with (meth)acrylic acid-2-hydroxyethyl; fluorine-containing vinyl monomers, such as fluorine-substituted (meth)acrylic acid alkyl ester; acid anhydride group-containing monomers, such as maleic acid anhydride and itaconic acid anhydride; aromatic vinyl compound monomers, such as styrene, $\alpha$-methylstyrene, and vinyl toluene; reactive halogen-containing vinyl monomers, such as 2-chloroethyl vinyl ether and monochloro vinyl acetate; amide group-containing vinyl monomers, such as (meth)acrylamide, N-isopropyl(meth)acrylamide, N-butyl (meth)acrylamide, N,N-diethyl(meth)acrylamide, N,N-dimethyl(meth)acrylamide, N-methylol(meth)acrylamide, N-ethylol (meth)acrylamide, N-methylolpropane(meth)acrylamide, N-methoxyethyl(meth)acrylamide, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth) acryloylpiperidine, N-(meth)acryloylpyrrolidine, N-vinyl morpholine, N-vinyl pyrazole, N-vinyl isoxazole, N-vinyl thiazole, N-vinyl isothiazole, and N-vinyl pyridazine; N-vinyl carboxylic acid amides; lactam monomers, such as N-vinyl caprolactam; cyanoacrylate monomers, such as (meth)acrylonitrile; (meth)acrylic acid aminoalkyl monomers, such as (meth) acrylic acid aminoethyl, (meth)acrylic acid N,N-dimethylaminoethyl, (meth)acrylic acid N,N-dimethylaminoethyl, and (meth)acrylic acid t-butylaminoethyl; imide group-containing monomers, such as cyclohexyl maleimide and isopropyl maleimide; isocyanate group-containing monomers, such as 2-isocyanate ethyl (meth) acrylate; organic silicon-containing vinyl monomers, such as vinyltrimethoxysilane, $\gamma$-methacryloxpropyl trimethoxy silane, allyltrimethoxysilane, trimethoxysilylpropylallylamine, and 2-methoxy ethoxy trimethoxy silane; hydroxyl group-containing monomers, such as (meth) acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth) acrylic acid hydroxylauryl, and (4-hydroxymethyl cyclohexyl)methyl methacrylate; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; olefins or dienes, such as ethylene, butadiene, isoprene, and isobutylene; vinyl ethers, such as vinyl alkyl ether; vinyl chloride; and others, such as macro-monomers having a radically polymerizable vinyl group at the monomer end to which a vinyl group has been polymerized, etc. These monomers can be copolymerized, alone or in combination thereof, with the (meth) acrylic acid ester

In the acrylic pressure-sensitive adhesive composition according to the present embodiment, specific examples of the (meth) acrylic polymer (C) include, for example, copolymers of the aforementioned (meth)acrylic acid ester having a terpene structure with: dicyclopentanyl methacrylate (DCPMA), cyclohexyl methacrylate (CHMA), isobornyl methacrylate (IBXMA), isobornyl acrylate (IBXA), dicyclopentanyl acrylate (DCPA), 1-adamantyl methacrylate (ADMA), 1-adamantyl acrylate (ADA), CHA (cyclohexyl acrylate), isobutyl methacrylate (IBMA), and methyl methacrylate (MMA).

A functional group reactive with an epoxy group or an isocyanate group may be further introduced into the (meth) acrylic polymer (C). Examples of such a functional group include a hydroxyl group, carboxyl group, amino group, amide group, and a mercapto group. When the (meth) acrylic polymer (C) is produced, it is preferable to use a monomer having such a functional group.

When a copolymer between the (meth)acrylic acid ester having a terpene structure and another (meth) acrylic

acid ester monomer or a copolymerizable monomer is used as the (meth) acrylic polymer (C), the content of the (meth) acrylic acid ester having a terpene structure is within a range of 10% by mass to 100% by mass, preferably within a range of 20% by mass to 100% by mass, and more preferably within a range of 25% by mass to 100% by mass, based on the total mass of the whole monomers that form the (meth)acrylic polymer (C). When 10% by mass or more of the (meth) acrylic acid ester having a terpene structure is contained, the pressure-sensitive adhesive force of the acrylic pressure-sensitive adhesive tape to adherends including an adherend having low polarity can be improved.

The weight average molecular weight of the (meth)acrylic polymer (C) is 1000 or more and less than 30000, preferably 1500 or more and less than 20000, and more preferably 2000 or more and less than 10000. If the molecular weight is 30000 or more, there are sometimes the cases where the effect of improving the pressure-sensitive adhesive force of the pressure-sensitive adhesive tape cannot be sufficiently obtained. Conversely, if the molecular weight is less than 1000, there are sometimes the cases where, because the molecular weight is too small, the pressure-sensitive adhesive force or holding property of the pressure-sensitive adhesive tape is decreased.

The weight average molecular weight of the acrylic polymer (A) or (B), or of the (meth) acrylic polymer (C) can be determined by a GPC method in terms of polystyrene. Specifically, the weight average molecular weight can be measured by using HPLC8020 and two TSKgel GMH-Hs(20) as columns, which are made by Tosoh Corporation, and under conditions in which a tetrahydrofuran solvent is used and a flow rate is approximately 0.5 ml/min.

As stated above, the content of the (meth)acrylic polymer (C) is within a range of 1 to 70 parts by mass based on 100 parts by mass of the acrylic polymer (B); however, the content is preferably within a range of 2 to 50 parts by mass, and more preferably within a range of 3 to 40 parts by mass. If the (meth) acrylic polymer (C) is added in an amount more than 70 parts by mass, the elastic modulus of a pressure-sensitive adhesive layer formed of the acrylic pressure-sensitive adhesive composition according to the present embodiment becomes large, and hence there are sometimes the cases where the adhesiveness at a low-temperature is deteriorated or the pressure-sensitive adhesive force is not exerted even at room temperature. Conversely, if the addition amount thereof is less than 1 part by mass, there are sometimes the cases where the effect of adding the (meth)acrylic polymer (C) cannot be obtained.

The glass transition temperature (Tg) of the (meth) acrylic polymer (C) is 0°C or higher to 300°C or lower, preferably 20°C or higher to 300°C or lower, and more preferably 40°C or higher to 300°C or lower. By making the glass transition temperature (Tg) to be 20°C or higher, the cohesive force of the pressure-sensitive adhesive layer, occurring at a temperature higher than or equal to room temperature, can be improved, and the holding property and adhesiveness occurring at a high temperature can also be improved. The glass transition temperatures of typical materials that can be used as the (meth)acrylic polymer (C) in the present embodiment are shown in Table 1. The glass transition temperatures shown there are nominal values described in documents or catalogs, etc. , or values calculated based on the following Equation (6) (Fox Equation). As stated above, the (meth)acrylic polymer (C) contains, as a monomer, the (meth) acrylic acid ester having a terpene structure.

$$1/Tg = W1/Tg1 + W2/Tg2 + *** + Wn/Tgn \qquad (6)$$

[wherein, Tg represents the glass transition temperature of the (meth)acrylic polymer (C) (unit: K), Tgi (i= 1, 2, *** , n) represents the glass transition temperature of a homopolymer that is formed of a monomer i (unit: K), and Wi (i= 1, 2, ***, n) represents the mass fraction of the monomer i in the whole monomer components]. The above Equation (6) is adopted when the (meth)acrylic polymer (C) is formed of n types of monomer components of monomer 1, monomer 2, ***, monomer n.

Herein, the "glass transition temperature of a homopolymer that is formed" means the "glass transition temperature of a homopolymer formed of the monomer", i.e., means the glass transition temperature (Tg) of a polymer that is formed only of a monomer (sometimes referred to as a "monomer X") as a monomer component. Specifically, the glass transition temperature (Tg) is described in "Polymer Handbook" (3rd edition, John Wiley & Sons, Inc, 1989). The glass transition temperature (Tg) of a homopolymer, which is not described in the aforementioned document, means a value obtained, for example, by the following measuring method. That is, after 100 parts by mass of a monomer X, 0.2 parts by mass of 2, 2'-azobisisobutyronitrile, and 200 parts by mass of ethyl acetate as a polymerization solvent are placed into a reactor provided with a thermometer, stirrer, nitrogen inlet pipe, and reflux cooling pipe, they are stirred for 1 hour while nitrogen gas is being introduced. After the oxygen in the polymerization system has been removed in such a way, the mixture is heated to 63°C and is reacted together for 10 hours. Subsequently, the mixture is cooled to room temperature to obtain a homopolymer solution having a solid content of 33% by mass. Subsequently, this homopolymer solution is casted and coated onto a release liner, which is then dried to produce a test sample having a thickness of approximately 2 mm (sheet-shaped homopolymer). Approximately 1 to 2 mg of this test sample are weighed into an aluminum open cell, and the Reversing Heat Flow (specific heat component) behaviors of the homopolymer are obtained by using a temperature-modulated DSC (product name: "Q-2000", made by TA Instruments) under a nitrogen environment

of 50 ml/min and at a rate of temperature increase of 5°C/min. With reference to JIS-K-7121, the temperature at the point where the straight line, which is located in the vertical axis direction at the same distance from both the straight line obtained by extending the base line on the low temperature side of the obtained Reversing Heat Flow and the straight line obtained by extending the base line on the high temperature side thereof, and the curved line in a portion where the glass transition temperature is changed in a stepwise pattern intersect with each other is made to be the glass transition temperature (Tg), assuming that it is a homopolymer.

[Table 1]

| COMPOSITION OF (METH) ACRYLIC POLYMER (C) | Tg(°C) | REMARKS |
|---|---|---|
| DCPMA | 175 | VALUE DESCRIBED IN DOCUMENTS, ETC. |
| DCPA | 120 | VALUE DESCRIBED IN DOCUMENTS, ETC. |
| IBXMA | 173 | VALUE DESCRIBED IN DOCUMENTS, ETC. |
| IBXA | 97 | VALUE DESCRIBED IN DOCUMENTS, ETC. |
| CHMA | 66 | VALUE DESCRIBED IN DOCUMENTS, ETC. |
| CHA | 15 | VALUE DESCRIBED IN DOCUMENTS, ETC. |
| IBMA | 48 | VALUE DESCRIBED IN DOCUMENTS, ETC. |
| MMA | 105 | VALUE DESCRIBED IN DOCUMENTS, ETC. |
| ADMA | 250 | VALUE DESCRIBED IN DOCUMENTS, ETC. |
| ADA | 153 | VALUE DESCRIBED IN DOCUMENTS, ETC. |
| HCPA | 65 | VALUE DESCRIBED IN DOCUMENTS, ETC. |
| HCPMA | 115 | VALUE DESCRIBED IN DOCUMENTS, ETC. |
| CHMA/IBMA = 60/40 | 59 | CALCULATED VALUE (BASED ON Fox EQUATION) |

The abbreviations in Table 1 represent the following compounds.

DCPMA: Dicyclopentanyl Methacrylate
DCPA: Dicyclopentanyl Acrylate
IBXMA: Isobornyl Methacrylate
IBXA: Isobornyl Acrylate
CHMA: Cyclohexyl Methacrylate
CHA: Cyclohexyl Acrylate
IBMA: Isobutyl Methacrylate
MMA: Methyl Methacrylate
ADMA: 1-Adamantyl Methacrylate
ADA: 1-Adamantyl Acrylate
HCPA: Hydrogenated Terpene Acrylate
HCPMA: Hydrogenated Terpene Methacrylate

<Method of Producing (Meth)Acrylic Polymer (C)>

The (meth) acrylic polymer (C) can be produced, for example, by subjecting the (meth) acrylic monomer having the aforementioned structure to polymerization with the use of a solution polymerization method, bulk polymerization method, emulsion polymerization method, suspension polymerization, and block polymerization, etc.

<Method of Adjusting Molecular Weight of (Meth)Acrylic Polymer (C)>

In order to adjust the molecular weight of the (meth) acrylic polymer (C), a chain transfer agent can be used while the polymer (C) is being polymerized. Examples of the chain transfer agent to be used include: compounds having a mercapt group, such as octylmercaptan, dodecyl mercaptan, t-dodecyl mercaptan, and mercaptoethanol; thioglycolic

acid, methyl thioglycolate, ethyl thioglycolate, propyl thioglycolate, butyl thioglycolate, t-butyl thioglycolate, 2-ethylhexyl thioglycolate, octyl thioglycolate, isooctyl thioglycolate, decyl thioglycolate, dodecyl thioglycolate, thioglycolic acid esters of: 3-mercapto-1 propanol; 3-mercapto-1,3-propanediol; and ethylene glycol, thioglycolic acid ester of neopentyl glycol, and thioglycolic acid ester of pentaerythritol.

The use amount of the chain transfer agent is not particularly limited, but the chain transfer agent is usually contained in an amount within a range of 0.1 to 20 parts by mass, preferably within a range of 0.2 to 15 parts by mass, and more preferably within a range of 0.3 to 10 parts by mass, based on 100 parts by mass of the (meth) acrylic monomer. By adjusting the addition amount of the chain transfer agent, as stated above, a (meth) acrylic polymer (C) having a preferred molecular weight can be obtained. The chain transfer agent can be used alone or in combination of two or more thereof.

The acrylic pressure-sensitive adhesive composition according to the present embodiment can contain, as essential components, the aforementioned acrylic polymer (B) and (meth) acrylic polymer (C) and can contain, as optional components, various additives that are generally used in the field of pressure-sensitive adhesive compositions. A tackifying resin, plasticizer, softener, filler, colorant (pigment, dye, or the like), antioxidant, leveling agent, stabilizer, and antiseptic, etc., are exemplified as such optional components. Such additives that are conventionally and publicly known can be used by ordinary methods.

In the acrylic pressure-sensitive adhesive layer containing: the acrylic polymer (B) as a pressure-sensitive adhesive composition; and the (meth) acrylic polymer (C) that has a terpene structure in its side chain and that has a weight average molecular weight of 1000 or more and less than 30000, the ratio of the solvent-insoluble component is within a range of 40 to 90% by mass, and preferably within a range of 45 to 85% by mass. If the ratio of the solvent-insoluble component is less than 40% by mass, the cohesive force becomes insufficient, and accordingly there are sometimes the cases where the holding property cannot be met. Conversely, if the ratio thereof is more than 90% by mass, the cohesive force becomes too large, and accordingly there are sometimes the cases where the pressure-sensitive adhesive force or resistance to resilience is decreased. A method of evaluating the ratio of the solvent-insoluble component will be described later.

(Ratio of Layer Thickness)

The ratio of the thickness of the surface layer 30a (or the surface layer 30b) to the total of the thickness of the core layer 20 and that of the surface layer 30a (or the surface layer 30b) is preferably within a range of 3 to 70%. If the ratio is less than 3%, there are sometimes the cases where desired adhesiveness cannot be obtained. Conversely, if the ratio is more than 70%, there are sometimes the cases where the effects that can be expected when the core layer 20 containing the bubbles (E) is included, such as a stress relaxation property and level-difference absorption property as a pressure-sensitive adhesive tape, cannot be obtained. Although not particularly limited, the total thickness of the acrylic pressure-sensitive adhesive tape 10 (the total of the thickness of the core layer 20 and that of the surface layer 30) is within a range of 0.4 mm to 4.0 mm, and preferably within a range of 0.5 mm to 2.5 mm.

(Method of Forming Multi-Layers)

A method of laminating the core layer 20 and the surface layer 30 is not particularly limited, but, for example, the methods described below can be used.

(1) Method of forming multi-layers by laminating the surface layer 30a on one of the surfaces of the core layer 20 and laminating the surface layer 30b on the other surface thereof, after the core layer 20 and the surface layer 30 have been separately cured: this method has the advantage that the accuracy of each layer thickness can be enhanced.

(2) Method of curing the core layer 20 after being coated onto the surface layer 30a (or the surface layer 30b) that has been cured in advance and then by curing the surface layer 30b (or the surface layer 30a) after being coated onto the core layer 20, or method of curing the surface layer 30a (or the surface layer 30b) after being coated onto one of the surfaces of the core layer 20 that has been cured in advance and then by curing the surface layer 30b (or the surface layer 30a) after being coated onto the other surface of the core layer 20: in this method, because one layer is coated onto another layer that has been cured, the accuracy of each layer thickness can be enhanced. Further, because one layer can be collectively coated onto another layer that has been cured, production steps can be simplified and production time can be shortened.

(3) Method of curing the surface layer 30 (or the core layer 20) and the core layer 20 (or the surface layer 30) after the core layer 20 (or the surface layer 30) has been sequentially or simultaneously coated onto the coated surface layer 30 (or the core layer 20) : in this method, both the surface layer 30 and the core layer 20 can be collectively coated.

For the formation of each layer, a coating roll, such as a roll coater or comma coater, may be used, or a slot die may be used. In particular, in the aforementioned method (3), a multi-layer slot die for coating each layer may also be used.

(Example of Method of Producing Acrylic Pressure-Sensitive Adhesive Tape)

[Preparation of Core Layer Composition]

The aforementioned (meth)acrylic acid alkyl ester and copolymerizable monomer are partially polymerized by mixing the two materials and a polymerization initiator. Thereby, a partial polymer (acrylic polymer syrup) having a predetermined rate of polymerization is produced. Subsequently, a predetermined amount of hollow glass microspheres (product name: CEL-STAR Z-27, made by Tokai Kogyo Co., Ltd.) are added to the acrylic polymer syrup. A precursor of the core layer composition is prepared by adding a fluorochemical surfactant (product name: Surflon S-393, made by AGC SEIMI CHEMICAL CO., LTD.; acrylic copolymer having a polyoxyethylene group and a fluorinated hydrocarbon group in its side chain; MW = 8300, 0.5 parts by mass) to the above syrup to which the hollow glass microspheres had been added. In the precursor of the core layer composition, the ratio of the volume of the hollow glass microspheres to the whole volume of the precursor of the core layer composition is, for example, approximately 1.5% by volume.

An apparatus, provided with both a stator on which minute teeth are provided on a disk having a through-hole at its center and a rotor that faces the stator and on which teeth that are as minute as those on the stator are provided on a disk, is prepared. The precursor of the core layer composition is introduced between the teeth on the stator and those on the rotor in the apparatus, and nitrogen gas is introduced into the precursor of the core layer composition through the through-hole, while the rotor is being rotated at high speed. Thereby, the core layer composition is obtained by mixing bubbles into the precursor of the core layer composition. The bubbles are mixed thereinto in an amount of, for example, approximately 20% by volume based on the whole volume of the core layer composition.

[Preparation of Surface Layer Composition]

The surface layer (meth) acrylic polymer (C) is prepared by combining the aforementioned (meth)acrylic monomer, chain transfer agent, polymerization initiator, and, if necessary, a copolymerizable monomer into a predetermined solvent. Subsequently, the aforementioned acrylic polymer syrup (partial polymer) and the obtained (meth)acrylic polymer (C) are mixed together to obtain a surface layer composition.

[Production of Core Layer]

The core layer composition is coated, with, for example, a roll coater, on one of the surfaces of a polyester film (release liner), the one of the surfaces being subjected to a release treatment. Subsequently, a release liner of the same type is attached to the other surface of the coated core layer composition. In this case, the two are attached to each other such that the surface of the release liner, the surface being subjected to a release treatment, faces the other surface of the core layer composition. Subsequently, ultraviolet rays are radiated by using, for example, a black light lamp. The core layer 20 is produced through the above procedures.

[Production of Surface Layer]

The surface layer composition is coated, with, for example, a roll coater, on one of the surfaces of a polyester film (release liner), the one of the surfaces being subjected to a release treatment. Subsequently, a release liner of the same type is attached to the other surface of the coated surface layer composition. In this case, the two are attached to each other such that the surface of the release liner, the surface being subjected to a release treatment, faces the other surface of the surface layer composition. Subsequently, ultraviolet rays are radiated by using, for example, a black light lamp. The surface layer 30 is produced through the above procedures.

[Attachment of Core Layer/Surface Layer]

The release liner attached to the one of the surfaces of each of the core layer 20 and the surface layer 30, which have been obtained through the aforementioned procedures, is peeled off such that the pressure-sensitive adhesive surfaces of both of them are attached to each other. Thereby, the acrylic pressure-sensitive adhesive tape 10 in which the surface layer 30 is provided on both sides of the core layer 20 is produced.

The surface layer composition and the core layer composition can contain, as optional components, various additives that are generally used in the field of pressure-sensitive adhesive compositions. A plasticizer, softener, filler,

colorant (pigment, dye, or the like), antioxidant, leveling agent, stabilizer, and antiseptic, etc., are exemplified as such optional components. Such additives that are conventionally and publicly known can be used by ordinary methods.

The acrylic pressure-sensitive adhesive tape according to the present embodiment may be a so-called pressure-sensitive adhesive tape comprising a substrate, in which the pressure-sensitive adhesive layer disclosed herein is provided on one or both surfaces of a sheet-shaped substrate (supporting body) in a fixed manner, i.e., without an intention of separating the pressure-sensitive adhesive layer from the substrate. More specifically, examples of the structure of the pressure-sensitive adhesive tape having such a form include, for example: a structure of sheet-shaped substrate/core layer/surface layer; a structure of sheet-shaped substrate/surface layer/core layer/surface layer; a structure of surface layer/core layer/sheet-shaped substrate/core layer/surface layer; and a structure of surface layer/core layer/surface layer/sheet-shaped substrate/surface layer/core layer/surface layer, etc. The concept of the pressure-sensitive adhesive tape described herein can involve objects referred to as a pressure-sensitive adhesive sheet, pressure-sensitive adhesive label, and pressure-sensitive adhesive film, etc.

The aforementioned substrate can be formed of a material appropriately selected, in accordance with the application of the pressure-sensitive adhesive tape, from the group consisting of, for example: plastic films, such as a polypropylene film, ethylene-propylene copolymer film, polyester film, and polyvinylchloride film; foam substrates, such as a polyurethane foam and polyethylene foam; paper, such as craft paper, crepe paper, and Japanese paper; cloth, such as cotton cloth and staple fiber cloth; nonwoven cloth, such as polyester nonwoven fabric and vinylon nonwoven fabric; metallic foils, such as aluminum foil and copper foil; and the like. As the aforementioned plastic films, both of a non-oriented film and an oriented (uniaxially oriented or biaxially oriented) film can be used. The surface of the substrate on which the pressure-sensitive adhesive layer is to be provided may be coated with a primer or be subjected to a surface treatment, such as a corona discharge treatment. The thickness of the substrate can be appropriately selected in accordance with the purpose, but is generally within a range of approximately 10 $\mu$m to approximately 500 $\mu$m (typically within a range of 10 $\mu$m to 200 $\mu$m).

The acrylic pressure-sensitive adhesive tape according to the present embodiment can be preferably used in the application in which members made of both various resins including, for example, PE (polyethylene), PP (polypropylene), ABS (acrylonitrile-butadiene-styrene copolymer), SBS (styrene-butadiene-styrene block copolymer), PC (polycarbonate), PVC (vinyl chloride), and an acrylic resin, such as PMMA (polymethyl methacrylate resin), and metals, such as SUS and aluminum, are joined (fixed) to the surfaces of automobiles (coatings of the bodies), house and building materials, and home electronic appliances, etc.

Because the acrylic pressure-sensitive adhesive tape according to the present embodiment is also excellent in transparency, the tape can be preferably used in the application in which various optical members are attached to, for example, liquid crystal cells, optical polyester films, and touch panel members, etc. Accordingly, the technique described herein includes a laminated body in which the pressure-sensitive adhesive layer containing the acrylic pressure-sensitive adhesive composition is provided in the optical member. This laminated body typically has an aspect in which the pressure-sensitive adhesive layer on the optical member is protected by a release liner. The optical member in which such a pressure-sensitive adhesive layer is provided can be easily attached to the surface, etc. , of a plastic cover lens panel, glass, or liquid crystal cell. The optical member is not particularly limited, but can be a polarizing film, phase difference film, transparent conductive film (ITO film), etc. Such an optical member may have a single-layer structure made of the same material, or may have a multiple-layer structure made of a plurality of materials. As a method of forming the pressure-sensitive adhesive layer on the optical member, a method of directly providing the pressure-sensitive adhesive layer thereto or a method of transferring the pressure-sensitive adhesive layer thereto can be appropriately adopted, in the same way as in the case where the pressure-sensitive adhesive layer is formed on a substrate. Typically, the pressure-sensitive adhesive layer formed on a release liner is transferred to the base surface of the optical member.

As stated above, the acrylic pressure-sensitive adhesive tape according to the present embodiment comprises the core layer 20 and the surface layer 30 provided on one or both sides of the core layer 20. The core layer 20 contains the acrylic polymer (A), and the surface layer 30 contains: 100 parts by mass of the acrylic polymer (B) as a pressure-sensitive adhesive composition; and 1 to 70 parts by mass of the (meth) acrylic polymer (C) that has a terpene structure in its sde chain and that has a weight average molecular weight of 1000 or more and less than 30000, as a tackifying resin. Thereby, the adhesiveness of the acrylic pressure-sensitive adhesive tape to an adherend having low polarity can be improved, which finally leads to the fact that the adhesion reliability of the acrylic pressure-sensitive adhesive tape to various adherends each having surface polarity different from others can be improved, thereby allowing the acrylic pressure-sensitive adhesive tape to be used for various joint applications in the fields, etc., of automobiles and home electric appliances.

It is assumed that, because the (meth)acrylic polymer (C) having a terpene structure in its side chain is compatible with the acrylic polymer (B), the adhesiveness of the acrylic pressure-sensitive adhesive tape to an adherend having low polarity is improved.

The surface layer of the acrylic pressure-sensitive adhesive tape according to the present embodiment can be designed so as not to contain an acidic group in the monomer that forms the acrylic polymer (B). In this case, an

acrylic pressure-sensitive adhesive tape can be obtained, in which an influence of metallic corrosion that is caused by an acidic group, etc., has been reduced. Even when the monomer that forms the acrylic polymer (B) contains an acidic group, the adhesiveness of the acrylic pressure-sensitive adhesive tape can be similarly improved.

Although both the surface layers 30a and 30b are provided on both sides of the core layer 20 in the acrylic pressure-sensitive adhesive tape 10 according to the aforementioned embodiments, either of the surface layers 30a and 30b may only be provided on the core layer 20. In addition, although the core layer 20 contains the acrylic polymer (A) as a pressure-sensitive adhesive composition, the fine particle (D), and the bubble (E), but may contain at least the acrylic polymer (A).

Examples

Hereinafter, the present invention will be described in detail based on Examples, but the invention should not be limited at all by these Examples.

Components of the surface layer compositions in the acrylic pressure-sensitive adhesive tapes according to Examples 1-1 to 1-10 and Comparative Examples 1-1 to 1-7 are shown in Table 2.

[Table 2]

| | CORE LAYER ACRYLIC POLYMER (A) | SURFACE LAYER ACRYLIC POLYMER (B) 100 PARTS BY MASS | (METH) ACRYLIC POLYMER (C) | | | | CROSS-LINKING AGENT (TMPTA) (PARTS BY MASS) | RATIO OF SOLVENT-INSOLUBLE COMPONENT (% BY MASS) |
|---|---|---|---|---|---|---|---|---|
| | | | | Mw | Tg | PARTS BY MASS | | |
| EXAMPLE 1-1 | | 2EHA/AA=94/6 | HCPMA | 3500 | 115°C | 20 | 0.12 | 66.3 |
| EXAMPLE 1-2 | | 2EHA/AA=94/6 | HCPMA/ DCPMA=50/50 | 3400 | 143°C | 20 | 0.08 | 51.4 |
| EXAMPLE 1-3 | | 2EHA/AA=94/6 | HCPA/ DCPMA=50/50 | 3400 | 112°C | 20 | 0.08 | 63.3 |
| EXAMPLE 1-4 | | 2EHA/NVP=86/14 | HCPMA | 3500 | 115°C | 20 | 0.14 | 74.5 |
| EXAMPLE 1-5 | | 2EHA/NVP/AA=84/14/2 | HCPMA | 3500 | 115°C | 20 | 0.06 | 58.5 |
| EXAMPLE 1-6 | | 2EHA/NVP=86/14 | HCPMA/ DCPMA=50/50 | 3400 | 143°C | 20 | 0.10 | 66.7 |
| EXAMPLE 1-7 | | 2EHA/NVP/AA=84/14/2 | HCPMA/ DCPMA=50/50 | 3400 | 143°C | 20 | 0.10 | 65.7 |
| EXAMPLE 1-8 | | 2EHA/NVP=86/14 | HCPA/ DCPMA=50/50 | 3400 | 112°C | 20 | 0.10 | 73.3 |
| EXAMPLE 1-9 | | 2EHA/NVP/AA=85/14/1 | HCPMA/ DCPMA=50/50 | 3400 | 143°C | 20 | 0.08 | 58.1 |
| EXAMPLE 1-10 | | 2EHA/NVP/AA=85/14/1 | HCPA/DCPMA= 50/50 | 3400 | 112°C | 20 | 0.06 | 61.4 |
| COMPARATIVE EXAMPLE 1-1 | | 2EHA/NVP=86/14 | | | | | (HDDA)0.045 | 77.4 |
| COMPARATIVE EXAMPLE 1-2 | 2EHA/AA=90/10 | 2EHA/AA=94/6 | | | | | (HDDA)0.07 | 752 |
| COMPARATIVE EXAMPLE 1-3 | | 2EHA/NVP=86/14 | CHMA/ IBMA=60/40 | 4000 | 59°C | 20 | 0.12 | 73.4 |
| COMPARATIVE EXAMPLE 1-4 | | 2EHA/AA=94/6 | CHMA/ iBMA=60/10 | 4000 | 59°C | 20 | 0.14 | 67.3 |

(continued)

| | CORE LAYER ACRYLIC POLYMER (A) | SURFACE LAYER ACRYLIC POLYMER (B) 100 PARTS BY MASS | (METH) ACRYLIC POLYMER (C) | | | | CROSS-LINKING AGENT (TMPTA) (PARTS BY MASS) | RATIO OF SOLVENT-INSOLUBLE COMPONENT (% BY MASS) |
|---|---|---|---|---|---|---|---|---|
| | | | | Mw | Tg | PARTS BY MASS | | |
| COMPARATIVE EXAMPLE 1-5 | | 2EHA/AA=94/6 | Clearon P135 | - | - | 20 | 0.20 | 49.1 |
| COMPARATIVE EXAMPLE 1-6 | | 2EHA/AA/HCPA=78/5/17 | | | | | 0.04 | 67.2 |
| COMPARATIVE EXAMPLE 1-7 | | 2EHA/NVP/ HCPA=72/11/17 | | | | | 0.06 | 72.4 |

The abbreviations in Table 2 represent the following compounds.

2EHA: 2-Ethylhexyl Acrylate
NVP: N-Vinyl-2-pyrrolidone
AA: Acrylic Acid
DCPMA: Dicyclopentanyl Methacrylate
CHMA: Cyclohexyl Methacrylate
IBMA: Isobutyl Methacrylate
TMPTA: Trimethylolpropane Triacrylate
HDDA: 1,6-Hexanediol Diacrylate
HCPMA: Hydrogenated Terpene Methacrylate
HCPA: Hydrogenated Terpene Acrylate
Clearon P135: Hydrogenated Terpene Resin made by YASUHARA CHEMICAL CO.

(Measurement of Ratio of Solvent-Insoluble Component)

A ratio of a solvent-insoluble component was determined in the following way: after 0.1 g of a surface layer was sampled and precisely weighed (mass before dipping), the sampled layer was dipped in 50 ml of ethyl acetate at room temperature (20 to 25°C) for 1 week; a solvent (ethyl acetate) insoluble portion was taken out to be dried at 130°C for 2 hours and then weighed (mass after dipping and drying); and the ratio was calculated by using an equation for calculating the ratio "solvent insoluble ratio (mass%) = [(mass after dipping and drying) / (mass before dipping)] × 100".

(Preparation of Acrylic Polymer Syrup 1 (2EHA/NVP = 86/14) as (B) Component)

Eighty six parts by mass of 2-ethylhexyl acrylate (2EHA), 14 parts by mass of N-vinyl-2-pyrrolidone (NVP), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 1) having a rate of polymerization of approximately 8% by mass was obtained by exposing the mixture to UV rays under a nitrogen atmosphere such that the mixture was partially photopolymerized.

(Preparation of Acrylic Polymer Syrup 2 (2EHA/AA = 94/6) as (B) Component)

Ninety four parts by mass of 2-ethylhexyl acrylate (2EHA), 6 parts by mass of acrylic acid (AA), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 2) having a rate of polymerization of approximately 8% by mass was obtained by exposing the mixture to UV rays under a nitrogen atmosphere such that the mixture was partially photopolymerized.

(Preparation of Acrylic Polymer Syrup 3 (2EHA/NVP/AA = 84/14/2) as (B) Component)

Eighty four parts by mass of 2-ethylhexyl acrylate (2EHA), 14 parts by mass of N-vinyl-2-pyrrolidone (NVP), 2 parts by mass of acrylic acid (AA), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 3) having a rate of polymerization of approximately 8% by mass was obtained by exposing the mixture to UV rays under a nitrogen atmosphere such that the mixture was partially photopolymerized.

(Preparation of Acrylic Polymer Syrup 4 (2EHA/NVP/AA = 85/14/1) as (B) Component)

Eighty five parts by mass of 2-ethylhexyl acrylate (2EHA), 14 parts by mass of N-vinyl-2-pyrrolidone (NVP), 1 part by mass of acrylic acid (AA), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 4) having a rate of polymerization of approximately 8% by mass was obtained by exposing the mixture to UV rays under a nitrogen atmosphere such that the mixture was partially photopolymerized.

(Preparation of Acrylic Polymer Syrup 5 (2EHA/AA/HCPA = 78/5/17) as (B) Component)

Seventy eight parts by mass of 2-ethylhexyl acrylate (2EHA), 5 parts by mass of acrylic acid (AA), 17 parts by mass of hydrogenated terpene methacrylate (following chemical formula (4), product name: HCPA, made by YASUHARA CHEMICAL CO.), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 5) having a rate of polymerization of approximately 8% by mass was obtained by exposing the mixture to UV rays under a nitrogen atmosphere such that the mixture was partially photopolymerized.

[Formula 7]

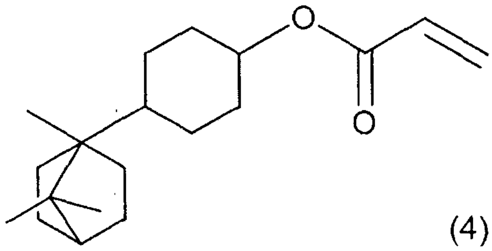

(4) HCPA

(Preparation of Acrylic Polymer Syrup 6 (2EHA/NVP/HCPA = 72/11/17) as (B) Component)

Seventy eight parts by mass of 2-ethylhexyl acrylate (2EHA), 11 parts by mass of N-vinyl-2-pyrrolidone (NVP), 17 parts by mass of hydrogenated terpene acrylate (above chemical formula (4), glass transition temperature (Tg) : 65°C, made by YASUHARA CHEMICAL CO., HCPA), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 6) having a rate of polymerization of approximately 8% by mass was obtained by exposing the mixture to UV rays under a nitrogen atmosphere such that the mixture was partially photopolymerized.

(Preparation of (Meth)Acrylic Polymer 1 (HCPMA) as (C) Component)

One hundred parts by mass of toluene, 100 parts by mass of hydrogenated terpene methacrylate (following chemical formula (5), product name: HCPMA, made by YASUHARA CHEMICAL CO.), and 3 parts by mass of thioglycolic acid (GSH acid), as a chain transfer agent, were placed into a 4-neck flask. After they were stirred under a nitrogen atmosphere at 70°C for 1 hour, 0.2 parts by mass of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 1 to be obtained. The glass transition temperature of the obtained (meth) acrylic polymer 1 was 115°C and the weight average molecular weight thereof was 3500.

[Formula 8]

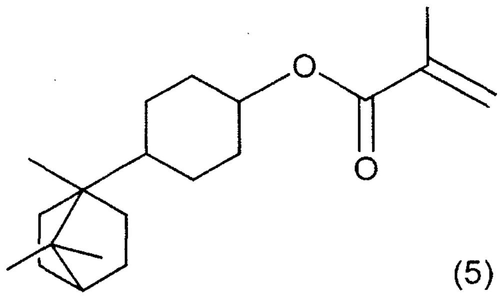

(5) HCPMA

(Preparation of (Meth)Acrylic Polymer 2 (HCPMA/DCPMA = 50/50) as (C) Component)

One hundred parts by mass of toluene, 50 parts by mass of hydrogenated terpene methacrylate (above chemical formula (5), product name: HCPMA, made by YASUHARA CHEMICAL CO.), 50 parts by mass of dicyclopentanyl methacrylate (DCPMA) (product name: FA-513M, made by Hitachi Chemical Co. , Ltd.), and 3 parts by mass of thioglycolic acid (GSH acid), as a chain transfer agent, were placed into a 4-neck flask. After they were stirred under a nitrogen atmosphere at 70°C for 1 hour, 0.2 parts by mass of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 2 to be obtained. The glass transition temperature of the obtained (meth) acrylic polymer 2 was 143°C and the weight average molecular weight thereof was 3400.

(Preparation of (Meth)Acrylic Polymer 3 (HCPA/DCPMA = 50/50) as (C) Component)

One hundred parts by mass of toluene, 50 parts by mass of hydrogenated terpene methacrylate (above chemical formula (4), product name: HCPMA, made by YASUHARA CHEMICAL CO.), 50 parts by mass of dicyclopentanyl methacrylate (DCPMA) (product name: FA-513M, made by Hitachi Chemical Co., Ltd.), and 3 parts by mass of thioglycolic acid (GSH acid), as a chain transfer agent, were placed into a 4-neck flask. After they were stirred under a nitrogen atmosphere at 70°C for 1 hour, 0.2 parts by mass of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 3 to be obtained. The glass transition temperature of the obtained (meth) acrylic polymer 3 was 112°C and the weight average molecular weight thereof was 3400.

(Preparation of (Meth)Acrylic Polymer 4 (CHMA/IBMA = 60/40) as (C) Component)

After cyclohexyl methacrylate (CHMA, 60 parts by mass), isobutyl methacrylate (IBMA, 40 parts by mass), and thioglycolic acid (4.0 parts by mass) were combined, dissolved oxygen was removed by blowing nitrogen gas thereinto. After the mixture was heated to 90°C, PERHEXYL O (made by NOF CORPORATION, 0.005 parts by mass) and PERHEXYL D (made by NOF CORPORATION, 0.01 parts by mass) were mixed. After being further stirred at 90°C for 1 hour, the mixture was heated to 150°C in 1 hour and stirred at the temperature for 1 hour. Subsequently, the mixture was heated to 170°C in 1 hour and stirred at the temperature for 60 minutes.

The pressure under which the mixture was placed was reduced at 170°C and the mixture was stirred for 1 hour to remove remaining monomers, thereby allowing (meth) acrylic polymer 4 to be obtained. The glass transition temperature of the obtained (meth)acrylic polymer 1 was 59°C (calculated by Fox Equation) and the weight average molecular weight thereof was 4000.

(Example 1-1)

(Preparation of Surface Layer Composition)

After 20 parts by mass of the aforementioned (meth) acrylic polymer 1 and 0.12 parts by mass of trimethylolpropane triacrylate were added to 100 parts by mass of the aforementioned acrylic polymer syrup 2, these were uniformly mixed together to prepare a surface layer composition.

(Production of Surface Layer)

A coated layer having a final thickness of 50 μm was formed by coating the aforementioned surface layer composition on one of the surfaces of a polyester film having a thickness of 38 μm (product name: Diafoil MRF, made by Mitsubishi Plastics Inc.), the one of the surfaces having been subjected to a release treatment with silicone. Subsequently, the surface of the coated surface layer composition was covered with one of the surfaces of a polyester film having a thickness of 38 μm (product name: Diafoil MRN, made by Mitsubishi Plastics Inc.), the one of the surfaces having been subjected to a release treatment with silicone, so that the one of the surfaces of the film was located near to the coated layer. Thereby, oxygen was blocked from the coated layer of the surface layer composition (surface layer pressure-sensitive adhesive layer). The surface layer pressure-sensitive adhesive layer sheet thus obtained was irradiated, for 360 seconds, with UV rays with an illumination intensity of 5 $mW/cm^2$ (measured by TOPCON UVR-T1 having

a maximum sensitivity at 350 nm), the UV rays being created by using a black light lamp (made by TOSHIBA CORPORATION). The surface layer made of an acrylic pressure-sensitive adhesive layer having a thickness of 50 μm was obtained in this way. The ratio of the solvent-insoluble component of the surface layer pressure-sensitive adhesive layer was 66.3% by mass. The polyester film covering each of the surfaces of the pressure-sensitive adhesive layer functions as a release liner.

(Preparation of Core Layer Composition)

After 0. 08 parts by mass of 1,6-hexanediol diacrylate were addted to 100 parts by mass of the aforementioned acrylic polymer syrup 2, hollow glass microspheres (product name: CEL-STAR Z-27, made by Tokai Kogyo Co., Ltd.) were added in an amount of 0.08 parts by mass based on the syrup.

A precursor of the core layer composition was prepared by adding a fluorochemical surfactant (product name: Surflon S-393, made by AGC SEIMI CHEMICAL CO., LTD.; acrylic copolymer having a polyoxyethylene group and a fluorinated hydrocarbon group in its side chain; MW = 8300, 0. 5 parts by mass) to the syrup to which the hollow glass microspheres had been added. In the precursor of the core layer composition, the ratio of the volume of the hollow glass microspheres to the whole volume of the precursor of the core layer composition was approximately 26% by volume.

The obtained precursor of the core layer composition was introduced between the teeth on a stator and those on a rotor in an apparatus provided with both the stator on which the minute teeth are provided on a disk having a through-hole at its center and the rotor that faces the stator and on which the teeth that are as minute as those on the stator are provided on a disk. Nitrogen gas was introduced into the precursor of the core layer composition through the through-hole, while the rotor was being rotated at high speed, thereby allowing bubbles to be mixed into the precursor of the core layer composition. Thereby, the core layer composition wasobtained. The bubbles were mixed thereinto in an amount of approximately 20% by volume based on the whole volume of the core layer composition.

(Production of Core Layer)

The obtained core layer composition was coated, with a roll coater, on one of the surfaces of a polyester film (release liner made of polyester) having a thickness of 38 μm, the one of the surfaces having been subjected to a release treatment, so that the thickness of the coated core layer composition was 1.2 mm. Subsequently, a polyester release liner of the same type was attached to the surface of the coated core layer composition such that one of the surfaces of the polyester release liner that had been subjected to a release treatment was located near to the core layer composition. Subsequently, ultraviolet rays were radiated, for three minutes, onto both the surfaces of the obtained layer using black light lamps each having an illumination intensity of 5 $mW/cm^2$. Thus, the core layer made of an acrylic pressure-sensitive adhesive layer having a thickness of 1.2 mm was obtained.

(Attachment of Core Layer/Surface Layer)

The acrylic pressure-sensitive adhesive tape according to Example 1-1, which has a structure of surface layer/core layer/surface layer, was obtained by peeling off the release liner attached to one of the surfaces of each of the core layer and the surface layer, which had been obtained through the aforementioned procedures, and then by attaching, to each other, the pressure-sensitive adhesive surfaces of both of the two layers.

(Example 1-2)

An acrylic pressure-sensitive adhesive tape was obtained in the same way as in Example 1-1, except that 20 parts by mass of the aforementioned (meth)acrylic polymer 2 and 0.08 parts by mass of trimethylolpropane triacrylate were added to 100 parts by mass of the aforementioned acrylic polymer syrup 2. The ratio of the solvent-insoluble component of the obtained surface layer pressure-sensitive adhesive layer was 51.4% by mass.

(Example 1-3)

An acrylic pressure-sensitive adhesive tape was obtained in the same way as in Example 1-1, except that 20 parts by mass of the aforementioned (meth) acrylic polymer 3 and 0.08 parts by mass of trimethylolpropane triacrylate were added to 100 parts by mass of the aforementioned acrylic polymer syrup 2. The ratio of the solvent-insoluble component of the obtained surface layer pressure-sensitive adhesive layer was 63.3% by mass.

(Example 1-4)

An acrylic pressure-sensitive adhesive tape was obtained in the same way as in Example 1-1, except that 20 parts by mass of the aforementioned (meth)acrylic polymer 1 and 0.14 parts by mass of trimethylolpropane triacrylate were added to 100 parts by mass of the aforementioned acrylic polymer syrup 1. The ratio of the solvent-insoluble component of the obtained surface layer pressure-sensitive adhesive layer was 74.5% by mass.

(Example 1-5)

An acrylic pressure-sensitive adhesive tape was obtained in the same way as in Example 1-1, except that 20 parts by mass of the aforementioned (meth)acrylic polymer 1 and 0.06 parts by mass of trimethylolpropane triacrylate were added to 100 parts by mass of the aforementioned acrylic polymer syrup 3. The ratio of the solvent-insoluble component of the obtained surface layer pressure-sensitive adhesive layer was 58.5% by mass.

(Example 1-6)

An acrylic pressure-sensitive adhesive tape was obtained in the same way as in Example 1-1, except that 20 parts by mass of the aforementioned (meth)acrylic polymer 2 and 0.10 parts by mass of trimethylolpropane triacrylate were added to 100 parts by mass of the aforementioned acrylic polymer syrup 1. The ratio of the solvent-insoluble component of the obtained surface layer pressure-sensitive adhesive layer was 66.7% by mass.

(Example 1-7)

An acrylic pressure-sensitive adhesive tape was obtained in the same way as in Example 1-1, except that 20 parts by mass of the aforementioned (meth)acrylic polymer 2 and 0.10 parts by mass of trimethylolpropane triacrylate were added to 100 parts by mass of the aforementioned acrylic polymer syrup 3. The ratio of the solvent-insoluble component of the obtained surface layer pressure-sensitive adhesive layer was 65.7% by mass.

(Example 1-8)

An acrylic pressure-sensitive adhesive tape was obtained in the same way as in Example 1-1, except that 20 parts by mass of the aforementioned (meth)acrylic polymer 3 and 0.10 parts by mass of trimethylolpropane triacrylate were added to 100 parts by mass of the aforementioned acrylic polymer syrup 1. The ratio of the solvent-insoluble component of the obtained surface layer pressure-sensitive adhesive layer was 73.3% by mass.

(Example 1-9)

An acrylic pressure-sensitive adhesive tape was obtained in the same way as in Example 1-1, except that 20 parts by mass of the aforementioned (meth)acrylic polymer 2 and 0.08 parts by mass of trimethylolpropane triacrylate were added to 100 parts by mass of the aforementioned acrylic polymer syrup 4. The ratio of the solvent-insoluble component of the obtained surface layer pressure-sensitive adhesive layer was 58.1% by mass.

(Example 1-10)

An acrylic pressure-sensitive adhesive tape was obtained in the same way as in Example 1-1, except that 20 parts by mass of the aforementioned (meth)acrylic polymer 3 and 0.06 parts by mass of trimethylolpropane triacrylate were added to 100 parts by mass of the aforementioned acrylic polymer syrup 4. The ratio of the solvent-insoluble component of the obtained surface layer pressure-sensitive adhesive layer was 61.4% by mass.

(Comparative Example 1-1)

An acrylic pressure-sensitive adhesive tape was obtained in the same way as in Example 1-1, except that 0.045 parts by mass of 1,6-hexanediol diacrylate were added to 100 parts by mass of the aforementioned acrylic polymer syrup 1. The ratio of the solvent-insoluble component of the obtained surface layer pressure-sensitive adhesive layer was 77.4% by mass.

(Comparative Example 1-2)

An acrylic pressure-sensitive adhesive tape was obtained in the same way as in Example 1-1, except that 0.07 parts by mass of 1,6-hexanediol diacrylate were added to 100 parts by mass of the aforementioned acrylic polymer syrup 2. The ratio of the solvent-insoluble component of the obtained surface layer pressure-sensitive adhesive layer was 75.2% by mass.

(Comparative Example 1-3)

An acrylic pressure-sensitive adhesive tape was obtained in the same way as in Example 1-1, except that 20 parts by mass of the aforementioned (meth)acrylic polymer 4 and 0.12 parts by mass of trimethylolpropane triacrylate were added to 100 parts by mass of the aforementioned acrylic polymer syrup 1. The ratio of the solvent-insoluble component of the obtained surface layer pressure-sensitive adhesive layer was 73.4% by mass.

(Comparative Example 1-4)

An acrylic pressure-sensitive adhesive tape was obtained in the same way as in Example 1-1, except that 20 parts by mass of the aforementioned (meth)acrylic polymer 4 and 0.14 parts by mass of trimethylolpropane triacrylate were added to 100 parts by mass of the aforementioned acrylic polymer syrup 2. The ratio of the solvent-insoluble component of the obtained surface layer pressure-sensitive adhesive layer was 67.3% by mass.

(Comparative Example 1-5)

An acrylic pressure-sensitive adhesive tape was obtained in the same way as in Example 1-1, except that 20 parts by mass of Clearon P135 (hydrogenated terpene resin made by YASUHARA CHEMICAL CO.) and 0.20 parts by mass of trimethylolpropane triacrylate were added to 100 parts by mass of the aforementioned acrylic polymer syrup 2. The ratio of the solvent-insoluble component of the obtained surface layer pressure-sensitive adhesive layer was 49.1% by mass.

(Comparative Example 1-6)

An acrylic pressure-sensitive adhesive tape was obtained in the same way as in Example 1-1, except that 0. 04 parts by mass of trimethylolpropane triacrylate were added to 100 parts by mass of the aforementioned acrylic polymer syrup 5. The ratio of the solvent-insoluble component of the obtained surface layer pressure-sensitive adhesive layer was 67.2% by mass.

(Comparative Example 1-7)

An acrylic pressure-sensitive adhesive tape was obtained in the same way as in Example 1-1, except that 0. 06 parts by mass of trimethylolpropane triacrylate were added to 100 parts by mass of the aforementioned acrylic polymer syrup 6. The ratio of the solvent-insoluble component of the obtained surface layer pressure-sensitive adhesive layer was 72.4% by mass.

(Test Method)

[180° Peeling-Off Pressure-Sensitive Adhesive Force Test]

After one of the release liners (polyester films) on the acrylic pressure-sensitive adhesive tape according to each of Examples and Comparative Examples was peeled off, a polyethylene terephthalate film having a thickness of 50 $\mu$m was attached. The obtained tape was cut into a piece having a width of 25 mm, which was used as a test specimen. In addition, a polypropylene plate (part number: 1600, made by Takiron Co. , Ltd.) and an acrylic plate (ACRYLITE, made by Mitsubishi Rayon Co., Ltd.), which had been cleaned with isopropyl alcohol and had a thickness of 2 mm, were prepared. After the release liner (polyester film) on the other surface of the pressure-sensitive adhesive layer sheet was peeled off, the pressure-sensitive adhesive surface of the sheet was attached to the polypropylene plate and acrylic plate by reciprocating a 2-kg roller.

After the acrylic pressure-sensitive adhesive tape was attached to each of the polypropylene plate and the acrylic plate, the sample was left uncontrolled under a 40°C-environment for 48 hours and then under a 23°C-environment for 30 minutes. The pressure-sensitive adhesive force (resistance force) (unit: N/25 mm) of the acrylic pressure-sensitive

adhesive tape to an adherend was measured by peeling off the other end of the tape in the 180° peeling-off direction at a speed of 50 mm/min. The case where the pressure-sensitive adhesive force to each of the polypropylene plate and the acrylic plate was larger than or equal to 40 N/25 mm was evaluated as good, while the case where the pressure-sensitive adhesive force thereto was less than 40 N/25 mm was evaluated as bad. It was also confirmed whether the failure pattern, occurring when peeled off, was an interfacial failure or a cohesion failure of the core layer. Results of the measurement are shown in Table 3.

[Resistance to Resilience Test]

The acrylic pressure-sensitive adhesive tape according to each of Examples and Comparative Examples was cut into a piece having a width of 10 mm and a length of 90 mm, and the piece was attached to a clean aluminum plate having a thickness of 0.5 mm, a width of 10 mm, and a length of 90 mm, which was used as a test specimen. Subsequently, the test specimen was curved so as to have a curvature of R = 50 mm by making the test specimen near to the aluminum plate follow a cylinder. Thereafter, the release liner (polyester film) on the other side of the acrylic pressure-sensitive adhesive tape was peeled off, and then the test specimen was laminated onto the aforementioned polypropylene plate. After the test specimen, in the state of being laminated onto the polypropylene plate, was left uncontrolled at room temperature (25°C) for 24 hours, the distance created by pop-off of the pressure-sensitive adhesive layer sheet, i.e., the distance between the surface of the polypropylene plate and the pressure-sensitive adhesive layer (average of the heights at both ends) (unit: mm) was measured. The case where the distance of the pop-off was smaller than or equal to 5 mm was evaluated as good, while the case where the distance thereof was larger than 5 mm was evaluated as bad. Results of the measurement are shown in Table 3. Herein, the values shown in Table 3 are average values with respect to arbitrary multiple points.

[Holding Property Test]

After one of the release liners (polyester films) of the acrylic pressure-sensitive adhesive tape according to each of Examples and Comparative Examples was peeled off, a polyethylene terephthalate film having a thickness of 50 μm was attached. The obtained tape was cut into a piece having a width of 10 mm, which was used as a test specimen. The pressure-sensitive adhesive surface of the test specimen having the area of 10 mm in width × 20 mm in length was attached to a bakelite plate that had been cleaned with toluene, and the test specimen was left uncontrolled under a 60°C-environment for 30 minutes. Thereafter, a weight was hung from one end of the specimen such that a 500-g load was applied in the shear direction, and the specimen, in the state of the weight being hung, was left uncontrolled under a 60°C-environment for 1 hour, thereafter allowing a holding property to be evaluated. The case where the test specimen had not dropped was evaluated as good ("A"), while the case where the test specimen had dropped was evaluated as bad. Results of the measurement are shown in Table 3.

[Table 3]

| | 180° PEELING-OFF PRESSURE-SENSITIVE ADHESIVE FORCE | | | | RESISTANCE TO RESILIENCE [mm]R50 | | HOLDING PROPERTY |
|---|---|---|---|---|---|---|---|
| | POLYPROPYLENE | | ACRYLIC | | POL YPRO-PYLENE | ACRYLIC | |
| | [N/25mm] | FAILURE PATTERN | [N/25mm] | FAILURE PATTERN | | | |
| EXAMPLE 1-1 | 44.0 | INTERFACIAL FAILURE | 64.1 | COHESION FAILURE | 3.6 | 0.0 | A |
| EXAMPLE 1-2 | 42.0 | INTERFACIAL FAILURE | 63.5 | COHESION FAILURE OF CORE LAYER | 0.0 | 0.0 | A |
| EXAMPLE 1-3 | 67.5 | COHESION FAILURE OF CORE LAYER | 60.0 | COHESION FAILURE OF CORE LAYER | 0.0 | 0.0 | A |
| EXAMPLE 1-4 | 46.5 | INTERFACIAL FAILURE | 65.9 | COHESION FAILURE OF CORE LAYER | 0.0 | 0.0 | A |
| EXAMPLE 1-5 | 50.5 | INTERFACIAL FAILURE | 58.9 | COHESION FAILURE OF CORE LAYER | 0.0 | 0.0 | A |
| EXAMPLE 1-6 | 54.4 | INTERFACIAL FAILURE | 64.3 | COHESION FAILURE OF CORE LAYER | 0.0 | 0.0 | A |
| EXAMPLE 1-7 | 46.4 | INTERFACIAL FAILURE | 57.8 | COHESION FAILURE OF CORE LAYER | 0.0 | 0.0 | A |
| EXAMPLE 1-8 | 50.1 | INTERFACIAL FAILURE | 68.0 | COHESION FAILURE OF CORE LAYER | 2.1 | 0.0 | A |
| EXAMPLE 1-9 | 48.4 | INTERFACIAL FAILURE | 63.0 | COHESION FAILURE OF CORE LAYER | 0.0 | 00 | A |

(continued)

| | 180° PEELING-OFF PRESSURE-SENSITIVE ADHESIVE FORCE | | | | RESISTANCE TO RESILIENCE [mm]R50 | | HOLDING PROPERTY |
|---|---|---|---|---|---|---|---|
| | POLYPROPYLENE | | ACRYLIC | | POL YPRO-PYLENE | ACRYLIC | |
| | [N/25mm] | FAILURE PATTERN | [N/25mm] | FAILURE PATTERN | | | |
| EXAMPLE 1-10 | 53.3 | INTERFACIAL FAILURE | 61.0 | COHESION FAILURE OF CORE LAYER | 0.0 | 0.0 | A |
| COMPARATIVE EXAMPLE 1-1 | 17.0 | INTERFACIAL FAILURE | 310 | INTERFACIAL FAILURE | 10.0 | 0.4 | A |
| COMPARATIVE EXAMPLE 1-2 | 18.0 | INTERFACIAL FAILURE | 41.0 | INTERFACIAL FAILURE | 9.3 | 0.3 | A |
| COMPARATIVE EXAMPLE 1-3 | 34.3 | INTERFACIAL FAILURE | 49.7 | COHESION FAILURE OF CORE LAYER | 8.8 | 0.2 | A |
| COMPARATIVE EXAMPLE 1-4 | 33.6 | INTERFACIAL FAILURE | 64.0 | COHESION FAILURE OF CORE LAYER | 8.8 | 0.6 | A |
| COMPARATIVE EXAMPLE 1-5 | 41.4 | INTERFACIAL FAILURE | 60.6 | COHESION FAILURE OF CORE LAYER | 6.9 | 7.4 | A |
| COMPARATIVE EXEMPLE 1-6 | 25.3 | INTERFACIAL FAILURE | 53.8 | INTERFACIAL FAILURE | 9.6 | 0.0 | A |
| COMPARATIVE EXAMPLE 1-7 | 29.8 | INTERFACIAL FAILURE | 61.0 | COHESION FAILURE OF CORE LAYER | 4.9 | 0.0 | A |

As shown in Table 3, the pressure-sensitive adhesive force of each of Comparative examples 1-1 to 1-4, 1, -6, and 1-7 was bad. The pressure-sensitive adhesive force of Comparative Example 1-1 to the acrylic plate was also bad. On the other hand, the pressure-sensitive adhesive force of each of Examples 1-1 to 1-10 was good. In addition, the failure pattern of Example 1-3, occurring when peeled off from each of the polypropylene plate and the acrylic plate, was a cohesion failure of the core layer; and the failure pattern of each of Examples, occurring when peeled off from the acrylic plate, was a cohesion failure of the core layer, and hence it has been confirmed that the surface layer pressure-sensitive adhesive composition has very high adhesiveness to an adherend. That is, it has been confirmed that the adhesiveness of each of Examples to an adherend having low polarity was more improved in comparison with those of Comparative Examples 1-1 to 1-4, 1-6, and 1-7.

The resistance to resilience of each of Comparative Examples 1-1 to 1-6 with respect to the polypropylene plate was bad. That of Comparative Example 1-5 with respect to the acrylic plate was also bad. On the other hand, the resistance to resilience of each of Examples with respect to each of the polypropylene plate and the acrylic plate was good.

Good holding property (cohesive force) was observed in each of Examples and Comparative Examples. Accordingly, it has been confirmed that, in Examples 1-1 to 1-10, excellent pressure-sensitive adhesive force, excellent resistance to resilience, and an excellent holding property were combined.

When the above results are summarized, it has been confirmed that, by containing, in the surface layer of an acrylic-pressure sensitive adhesive tape, the (meth)acrylic polymer (B) that has a terpene structure in its side chain and that has a weight average molecular weight of 1000 or more and less than 30000 as a tackifying resin to be added to the acrylic polymer (A) as a pressure-sensitive adhesive composition, the effect that all of the pressure-sensitive adhesive force to adherends including an adherend having low polarity, resistance to resilience, and a holding property can be made good, the effect having not been achieved before, can be obtained.

(Embodiment 2)

(Problem to be Solved by Present Embodiment)

In an acrylic pressure-sensitive adhesive composition to which a tackifying resin, such as a terpene resin, has been added, there has been a problem that the transparency of the composition is deteriorated because of its insufficient compatibility and hence it is difficult to apply the composition to, for example, an optical use, in addition to the problem described in Embodiment 1.

The present embodiment has been made in view of these situations, and a purpose of the embodiment is to provide a technique in which both the adhesiveness of an acrylic pressure-sensitive adhesive tape, such as the pressure-sensitive adhesive force, resistance to resilience, and holding property (cohesive force), and the transparency thereof can be improved.

An aspect of the present embodiment is an acrylic pressure-sensitive adhesive composition. The acrylic pressure-sensitive adhesive composition contains: 100 parts by mass of an acrylic polymer (F); and 1 to 70 parts by mass of a (meth) acrylic polymer (G) that has a terpene structure in its side chain and that has a weight average molecular weight of 1000 or more and less than 30000.

According to the acrylic pressure-sensitive adhesive composition of this embodiment, the pressure-sensitive adhesive force of an acrylic pressure-sensitive adhesive tape to adherends including an adherend having low polarity can be improved.

In the acrylic pressure-sensitive adhesive composition according to the aforementioned embodiment, the glass transition temperature of the (meth) acrylic polymer (G) may be 0°C or higher to 300°C or lower. The (meth) acrylic polymer (G) may also contain, in the whole monomers and as a monomer unit, 10% by mass or more to 100% by mass or less of a (meth) acrylic monomer having a terpene structure.

The acrylic polymer (F) may contain, as a monomer unit, at least one type of monomer selected from the group consisting of N-vinyl cyclic amides, represented by the acrylic (1) described in the following general formula, and carboxyl group-containing monomers:

[Formula 9]

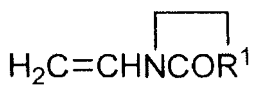

(1)

wherein, $R^1$ is a divalent organic group.

Another aspect of the present embodiment is an acrylic pressure-sensitive adhesive layer. The acrylic pressure-sensitive adhesive layer is made of the acrylic pressure-sensitive adhesive composition according to any one the aforementioned aspects. The acrylic pressure-sensitive adhesive layer according to this aspect may contain 40 to 90% by mass of a solvent-insoluble component.

Still another aspect of the present embodiment is an acrylic pressure-sensitive adhesive tape. The acrylic pressure-sensitive adhesive tape includes the acrylic pressure-sensitive adhesive layer according to any one of the aforementioned aspects.

(Effect of Present Embodiment)

According to the present embodiment, the adhesiveness of the acrylic pressure-sensitive adhesive tape, such as the pressure-sensitive adhesive force, resistance to resilience, and holding property (cohesive force), and the transparency thereof can be improved.

The acrylic pressure-sensitive adhesive composition according to the present embodiment contains: the acrylic polymer (F) as a pressure-sensitive adhesive composition; and the (meth)acrylic polymer (G) that has a weight average molecular weight of 1000 or more and less than 30000 and that has a terpene structure in its side chain (hereinafter, appropriately referred to as the (meth)acrylic polymer (G)) as a tackifying resin.

The content of each component in the acrylic pressure-sensitive adhesive composition according to Embodiment 2 is described below.

Acrylic Polymer (F): 100 Parts by Mass
(Meth)Acrylic Polymer (G): 1 to 70 Parts by Mass

Hereinafter, the acrylic polymer (F) and the (meth) acrylic polymer (G) will be described in detail.

[Acrylic Polymer (F)]

The acrylic polymer (F) contains, as a monomer unit, (meth) acrylic acid alkyl ester having, for example, a $C_{1-20}$ linear or branched alkyl group in an amount of 50% by mass or more. In addition, the acrylic polymer (F) may have a structure formed only by (meth)acrylic acid alkyl ester having a $C_{1-20}$ alkyl group or by a combination of two or more thereof. The acrylic polymer (F) can be obtained by subjecting the (meth) acrylic acid alkyl ester to polymerization (e.g., solution polymerization, emulsion polymerization, UV polymerization), along with a polymerization initiator.

The ratio of the (meth)acrylic acid alkyl ester having a $C_{1-20}$ alkyl group is 50% by mass or more to 99.9% by mass or less, preferably 60% by mass or more to 98% by mass or less, and more preferably 70% by mass or more to 95% by mass less, based on the total mass of the monomer components for preparing the acrylic polymer (F).

Examples of the (meth) acrylic acid alkyl ester having a $C_{1-20}$ alkyl group include, for example: (meth)acrylic acid $C_{1-20}$ alkyl esters [preferably (meth)acrylic acid $C_{2-14}$ alkyl esters, more preferably (meth) acrylic acid $C_{2-10}$ alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth) acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth) acrylic acid octadecyl, (meth) acrylic acid nonadecyl, and (meth) acrylic acid eicosyl. In addition, the (meth) acrylic acid alkyl ester means an acrylic acid alkyl ester and/or a methacrylic acid alkyl ester, and all of the "(meth)..." expressions have the same meaning.

For the purpose of modifying cohesive force, heat resistance, and cross-linking property, etc., the acrylic polymer (F) may contain, if necessary, another monomer component (copolymerizable monomer) that is copolymerizable with the (meth)acrylic acid alkyl ester. Accordingly, the acrylic polymer (F) may contain a copolymerizable monomer along with the (meth) acrylic acid alkyl ester as a major component. A monomer having a polar group can be preferably used as the copolymerizable monomer.

Specific examples of the copolymerizable monomer include: carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl) methyl methacrylate; acid anhydride group-containing monomers, such as maleic acid anhydride and itaconic acid anhydride; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxy naphthalenesulfonic acid; phosphate group-containing monomers, such as 2-hydroxyethyl acryloyl phosphate; (N-substituted) amide monomers, such as N,N-dialkyl(meth)acrylamides including (meth)acrylamide, N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(t-butyl)(meth)acrylamide, N-ethyl(meth)acrylamide, N-isopropyl(meth)acrylamide, N-butyl(meth)acrylamide, N-n-butyl(meth)acrylamide, N-methylol(meth)acrylamide, N-ethylol(meth)acrylamide, N-methylol propane (meth) acrylamide, N-methoxymethyl(meth)acrylamide, N-methoxyethyl(meth)acrylamide, N-butoxymethyl(meth)acrylamide, and N-acryloylmorpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexylmaleimide, N-isopropylmaleimide, N-laurylmaleimide, and N-phenylmaleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; vinyl esters, such as vinyl acetate and vinyl propionate; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinyl morpholine, N-vinyl-2-piperidone, N-vinyl-3-morpholine, N-vinyl-2-caprolactam, N-vinyl-1,3-oxazine-2-one, N-vinyl-3,5-morpholine dione; N-vinylpyrazole, N-vinyl isoxazole, N-vinylthiazole, N-vinylisothiazole, and N-vinylpyridazine; N-vinyl carboxylic acid amides; lactam monomers, such as N-vinyl caprolactam; cyanoacrylate monomers, such as acrylonitrile and methacrylonitrile; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; (meth)acrylic acid alkoxy alkyl monomers, such as (meth)acrylic acid methoxyethyl, (meth)acrylic acid ethoxyethyl, (meth)acrylic acid propoxyethyl, (meth)acrylic acid butoxyethyl, and (meth)acrylic acid ethoxypropyl; styrene monomers, such as styrene and $\alpha$-methylstyrene; epoxy group-containing acrylic monomers, such as (meth)acrylic acid glycidyl; glycol acrylic ester monomers, such as (meth)acrylic acid polyethylene glycol, (meth) acrylic acid polypropylene glycol, (meth)acrylic acid methoxy ethylene glycol, and (meth)acrylic acid methoxy polypropylene glycol; acrylic acid ester monomers having a heterocycle, halogen atom, silicon atom, or the like, such as (meth) acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; vinyl esters, such as vinyl acetate and vinyl propionate aromatic vinyl compounds, such as vinyl toluene and styrene; olefins or dienes, such as ethylene, butadiene, isoprene, and isobutylene; vinyl ethers, such as vinyl alkyl ether; vinyl chloride; sulfonic acid group-containing monomers, such as vinyl sulfonate sodium; imide group-containing monomers, such as cyclohexyl maleimide and isopropyl maleimide; isocyanate group-containing monomers, such as 2-isocyanate ethyl(meth)acrylate; (meth)acrylic acid esters having an alicyclic hydrocarbon group, such as cyclopentyl (meth) acrylate, cyclohexyl(meth)acrylate, and isobornyl (meth) acrylate; (meth) acrylic acid esters having an aromatic hydrocarbon group, such as phenyl(meth)acrylate; and (meth)acrylic acid esters obtained from terpene compound derivative alcohols. These copolymerizable monomers can be used alone or in combination of two or more thereof.

N-vinyl cyclic amides represented by the following general formula (1) are exemplified as more preferred monomers among the aforementioned nitgrpgen-containing heterocyclic monomers, and in particular, N-vinyl-2-pyrrolidone can be preferably used.

[Formula 10]

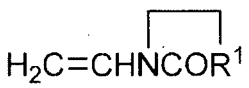 (1)

wherein, $R^1$ is a divalent organic group.

When the acrylic polymer (F) contains a coplymerizable monoer along with a (meth)alkyl acid alkyl ester as a major component, carboxyl group-containing monomers can be preferably used. Among them, an acrylic acid can be preferably used. The use amount of the copolymerizable monomer is not particularly limited, but the copolymerizable monomer can be usually contained in an amount within a range of 0.1 to 40% by mass, preferably within a range of 0.5 to 30% by mass, and more preferably within a range of 1 to 20% by mass, based on the total mass of the monomer components for preparing the acrylic polymer (F).

By containing the copolymerizable monomer in an amount of 0.1% by mass or more, a decrease in the cohesive force of an acrylic pressure-sensitive adhesive tape or sheet having a pressure-sensitive adhesive layer formed of the acrylic pressure-sensitive adhesive composition can be prevented and high shear force can be obtained. Further, by containing the copolymerizable monomer in an amount of 40% by mass or less, it can be prevented that the cohesive force thereof may become too large and the tackiness at normal temperature (25°C) can be improved.

The acrylic polymer (F) may also contain, if necessary, a polyfunctional monomer, in order to adjust the cohesive force of the acrylic pressure-sensitive adhesive tape to be formed.

Examples of the polyfunctional monomer include, for example: (poly)ethylene glycol di(meth)acrylate, (poly) propylene glycol di(meth)acrylate, neopentyl glycol di(meth)acrylate, pentaerythritol di(meth)acrylate, pentaerythritol tri (meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl (meth) acrylate, vinyl(meth)acrylate, divinylbenzene, epoxy acrylate, polyester acrylate, urethane acrylate, butyl di (meth)acrylate, and hexyl di(meth)acrylate, etc. Among them, trimethylolpropane tri(meth)acrylate, hexanediol di(meth) acrylate, and dipentaerythritol hexa(meth)acrylate can be preferably used. The polyfunctional (meth)acrylates can be used alone or in combination of two or more thereof.

The use amount of the polyfunctional monomer is changed depending on the molecular weight or the number of functional groups thereof, but the polyfunctional monomer is added in an amount within a range of 0.01 to 3.0% by mass, preferably within a range of 0.02 to 2.0% by mass, and more preferably within a range of 0.03 to 1.0% by mass, based on the total mass of the monomer components for preparing the acrylic polymer (F).

If the use amount of the polyfunctional monomer is more than 3.0% by mass based on the total mass of the monomer components for preparing the acrylic polymer (F), for example, the cohesive force of the acrylic pressure-sensitive adhesive composition may become too large and accordingly there are sometimes the cases where the adhesive force is decreased. On the other hand, if the use amount thereof is less than 0.01% by mass, for example, there are sometimes the cases where the cohesive force of the acrylic pressure-sensitive adhesive composition is decreased.

<Polymerization Initiator>

In preparing the acrylic polymer (F), the acrylic polymer (F) can be easily formed by a curing reaction using heat or ultraviolet rays with the use of a polymerization initiator, such as a thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators (for example, 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine)dihydrochloride, etc.); peroxide polymerization initiators (for example, dibenzoyl peroxide, t-butyl permaleate, and lauroyl peroxide, etc.); and redox polymerization initiators, etc.

The use amount of the thermal polymerization initiator is not particularly limited, and only has to be within a conventional range in which it can be used as a thermal polymerization initiator.

The photo-polymerization initiator is not particularly limited, but, for example, a benzoin ether photo-polymerization initiator, acetophenone photo-polymerization initiator, α-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, acylphosphine oxide photo-polymerization initiator, or the like, can be used.

Specific examples of the benzoin ether photo-polymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [product name: IRGACURE 651, made by BASF], and anisole methyl ether, etc. Specific examples of the acetophenone photo-polymerization initiator include, for example: 1-hydroxycyclohexyl phenyl ketone [product name: IRGACURE 184, made by BASF], 4-phenoxy dichloroacetophenone, 4-t-butyl-dichloroacetophenone, 1-[4-(2-hydroxyethoxy)-phenyl]-2-hydroxy-2-methyl-1-propane-1 -one [product name: IRGACURE 2959, made by BASF], 2-hydroxy-2-methyl-1-phenyl-propane-1-one [product name: DAROCUR 1173, made by BASF], and methoxy acetophenone, etc. Specific examples of the α-ketol photo-polymerization initiator include, for example: 2-methyl-2-hydroxy propiophenone and 1- [4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,1-propanedione-2-(o-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and α-hydroxy cyclohexyl phenyl ketone, etc. Specific examples of the ketal photo-polymerization initiator include, for example, benzyl dimethyl ketal, etc. Specific examples of the thioxanthone photo-polymerization initiator include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone, etc.

Examples of the acylphosphine photo-polymerization initiator include, for example:

bis(2,6-dimethoxybenzoyl)phenylphosphine oxide,
bis(2,6-dimethoxybenzoyl)(2,4,4-trimethylpentyl) phosphine oxide, bis(2,6-dimethoxybenzoyl)-n-butyl phosphine oxide,
bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide,
bis(2,6-dimethoxybenzoyl)octylphosphine oxide,
bis(2-methoxybenzoyl)(2-methylpropane-1-yl)phosphine oxide,
bis(2-methoxybenzoyl)(1-methylpropane-1-yl)phosphine oxide,
bis(2,6-diethoxybenzoyl)(2-methylpropane-1-yl)phosphine oxide,
bis(2,6-diethoxybenzoyl)(1-methylpropane-1-yl) phosphine oxide,
bis(2,6-dibutoxybenzoyl)(2-methylpropane-1-yl) phosphine oxide,
bis(2,4-dimethoxybenzoyl)(2-methypropane-1-yl) phosphine oxide,
bis(2,4,6-trimethylbenzoyl)(2,4-dipentoxyphenyl) phosphine
oxide, bis(2,6-dimethoxybenzoyl)benzyl phosphine oxide,
bis(2,6-dimethoxybenzoyl)-2-phenylpropyl phosphine oxide,
bis(2,6-dimethoxybenzoyl)-2-phenylethyl phosphine oxide,
bis(2,6-dimethoxybenzoyl)benzyl phosphine oxide,
bis(2,6-dimethoxybenzoyl)-2-phenylpropyl phosphine oxide,
bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide,
bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide,
bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide,
bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide,
bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide, etc.

The use amount of the photo-polymerization initiator is not particularly limited, but the photo-polymerization initiator is combined, for example, in an amount within a range of 0.01 to 5 parts by mass, and preferably within a range of 0.05 to 3 parts by mass, based on 100 parts by mass of the monomer components for preparing the acrylic polymer (F).

If the use amount of the photo-polymerization initiator is less than 0. 01 parts by mass, there are sometimes the cases where a polymerization reaction becomes insufficient. If the use amount thereof is more than 5 parts by mass, there are sometimes the cases where an ultraviolet ray does not reach the inside of the pressure-sensitive adhesive layer, because the photo-polymerization initiator absorbs an ultraviolet ray. In this case, a decrease in the rate of polymerization is caused, or the molecular weight of the generated polymer becomes small. Thereby, the cohesive force of the acrylic pressure-sensitive adhesive layer to be formed becomes small, and hence there are sometimes the cases where, when the pressure-sensitive adhesive layer is peeled off from a film, part of the layer remains on the film and accordingly the film cannot be reused. The photo-polymerization initiators may be used alone or in combination of two or more thereof.

In order to adjust the cohesive force, a cross-linking agent can also be used, other than the aforementioned polyfunctional monomers. Commonly-used cross-linking agents can be used as the cross-linking agent. Examples of the cross-linking agents include, for example: an epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. In particular, an isocyanate cross-linking agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate,

triphenylmethane triisocyanate, polymethylene polyphenyl isocyanate, and these adducts with polyols, such as trimethylolpropane. Alternatively, a compound having, in one molecule, at least one isocyanate group and one or more unsaturated bonds, specifically 2-isocyanate ethyl(meth)acrylate, etc., can also be used as the isocyanate cross-linking agent.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl)cyclohexane, etc.

In the present embodiment, the acrylic polymer (F) can also be prepared as a partial polymer (acrylic polymer syrup) that can be obtained by radiating ultraviolet (UV) rays onto a mixture in which the aforementioned monomer components and the polymerization initiator have been combined, so that the monomer component is partially polymerized. An acrylic pressure-sensitive adhesive composition is prepared by combining the later-described (meth)acrylic polymer (G) into the acrylic polymer syrup, and then polymerization can also be completed by coating the pressure-sensitive adhesive composition on a predetermined object to be coated and by radiating UV rays. The weight average molecular weight (Mw) of the acrylic polymer (F) is, for example, within a range of 30000 to 5000000.

The glass transition temperature (Tg) of the acrylic polymer (F) is lower than 0°C, and preferably lower than -10°C, and is usually higher than or equal to -80°C.

[(Meth)Acrylic Polymer (G)]

The (meth)acrylic polymer (G) having a terpene structure in its side chain is a polymer having a weight average molecular weight smaller than that of the acrylic polymer (F), and functions as a tackifying resin and has the advantage that inhibition of polymerization is hardly caused when UV polymerization is performed. The (meth) acrylic polymer (G) contains, as a monomer unit, a (meth) acrylic acid ester having, for example, a terpene structure. Accordingly, the compatibility of the polymer with the acrylic polymer (F) is not low, different from the case of an ordinary terpene tackifying resin, and a phase separation is hardly caused, and hence the (meth)acrylic polymer (G) is excellent in adhesion reliability. Further, an acrylic pressure-sensitive adhesive layer can be obtained, in which the haze thereof is low and the transparency is good. Furthermore, the (meth) acrylic acid ester having a terpene structure provides the advantage that the refractive index of a pressure-sensitive adhesive can be improved.

The terpene structure (terpenes) described herein generally means the compounds that are extracted from the essential oil components of plants and are based on the isoprene rule represented by a molecular formula of $C_5H_8$.

Specific examples thereof include, in terms of a terpene structure: monoterpenes, such as α-pinene, β-pinene, carene, γ-terpinene, d-limonene, dipintene, terpinolene, β-phellandrene, pyronene, camphene, and myrcene; and sesquiterpenes, such as longifolene. These compounds may be used alone or in combination of two or more thereof.

The (meth) acrylic acid ester having a terpene structure is not particularly limited, but can be appropriately obtained by using a publicly-known method. For example, it can be obtain by an esterification reaction between the corresponding terpene alcohol and the aforementioned (meth)acrylic acid. The (meth)acrylic acid ester containing the terpene structure thus obtained is not particularly limited, but can be appropriately used as a monomer unit of the (meth) acrylic polymer (G).

A (meth) acrylic acid ester having a terpene structure, the glass transition temperature (Tg) of the homopolymer of which is 0°C or lower, may be used, or that, the glass transition temperature thereof is 0°C or higher, may be used. The aforementioned monomer, the glass transition temperature (Tg) of the homopolymer of which is 0°C or lower, provides the effect of improving the tackiness of the pressure-sensitive adhesive layer. On the other hand, a monomer, in which the glass transition temperature (Tg) of the aforementioned homopolymer is higher than 0°C, provides the effect of improving durability (in particular, heat resistance). The maximum of the glass transition temperature (Tg) of the homopolymer of the (meth)acrylic acid ester having a terpene structure is approximately 180°C, and a (meth) acrylic acid ester, the glass transition temperature (Tg) of the homopolymer of which is lower than approximately 150°C, is preferably used. If the glass transition temperature (Tg) of the homopolymer is higher than 180°C, it is needed to reduce the use amount of the (meth)acrylic acid ester in order to make the glass transition temperature (Tg) of the whole base polymer to be 0°C or lower, thereby possibly causing the improvement of the adhesiveness of an acrylic pressure-sensitive adhesive tape to be difficult. Examples the (meth)acrylic acid ester having a terpene structure are shown below (the following formulae (2) to (5)).

[Formula 11]

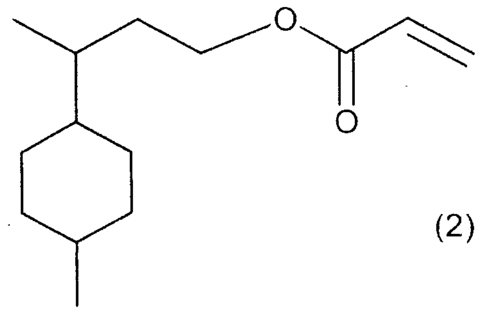

(2)

[Formula 12]

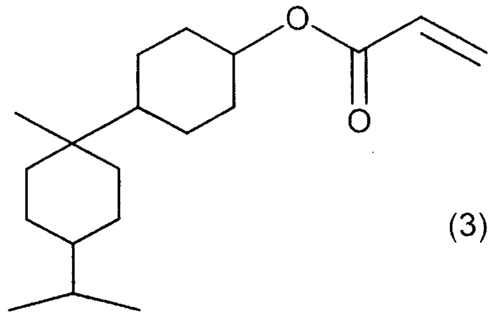

(3)

[Formula 13]

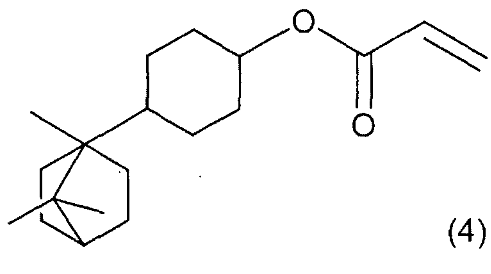

(4) HCPA

[Formula 14]

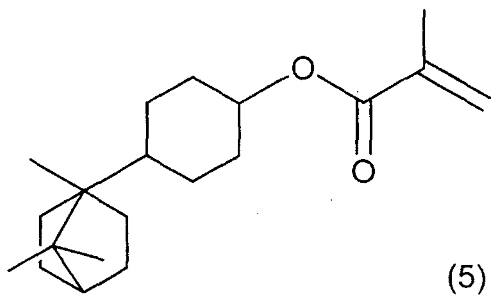

(5) HCPMA

Alternatively, the (meth)acrylic polymer (G) can be obtained by copolymerizing another monomer component (copolymerizable monomer) that is copolymerizable with the (meth) acrylic acid ester having a terpene structure, in addition to the (meth) acrylic acid ester component unit having a terpene structure.

Examples of the another monomer that is copolymerizable with the (meth)acrylic acid ester having a terpene structure include: (meth) acrylic acid esters having a $C_{1-20}$ alkyl group, such as (meth)acrylic acid methyl; (meth)acrylic acid esters having an alicyclic hydrocarbon group, such as cyclopentyl(meth)acrylate, cyclohexyl(meth)acrylate, and isobornyl(meth)acrylate; (meth)acrylic acid esters having an aromatic hydrocarbon group, such as phenyl(meth)acrylate; (meth) acrylic acid alkoxy alkyl monomers, such as (meth) acrylic acid methoxyethyl, (meth)acrylic acid ethoxyethyl, (meth) acrylic acid propoxyethyl, (meth) acrylic acid butoxyethyl, and (meth) acrylic acid ethoxypropyl; salts, such as (meth) acrylic acid alkali metal salt; di(meth)acrylic acid ester monomers of (poly)alkylene glycols, such as di(meth) acrylic acid ester of ethylene glycol, di (meth) acrylic acid ester of diethylene glycol, di(meth)acrylic acid ester of triethylene glycol, di(meth)acrylic acid ester of polyethylene glycol, di (meth) acrylic acid ester of propylene glycol, di (meth) acrylic acid ester of dipropylene glycol, and di (meth) acrylic acid ester of tripropylene glycol; poly(meth)acrylic acid ester monomers, such as trimethylolpropane tri(meth)acrylic acid ester; vinyl esters, such as vinyl acetate and vinyl propionate; halogenated vinyl compounds, such as vinylidene chloride and (meth)acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline; aziridine group-containing polymerizable compounds, such as (meth)acryloylaziridine and (meth)acrylic acid-2-aziridinylethyl; epoxy group-containing vinyl monomers, such as allyl glycidyl ether, (meth) acrylic acid glycidyl ether, and (meth)acrylic acid-2-ethyl glycidyl ether; hydroxyl group-containing vinyl monomers, such as (meth)acrylic acid-2-hydroxyethyl, (meth)acrylic acid-2-hydroxypropyl, monoesters of (meth)acrylic acids with polypropylene glycol or polyethylene glycol, and adducts of lactones with (meth)acrylic acid-2-hydroxyethyl; fluorine-containing vinyl monomers, such as fluorine-substituted (meth)acrylic acid alkyl ester; acid anhydride group-containing monomers, such as maleic acid anhydride and itaconic acid anhydride; aromatic vinyl compound monomers, such as styrene, $\alpha$-methylstyrene, and vinyl toluene; reactive halogen-containing vinyl monomers, such as 2-chloroethyl vinyl ether and monochloro vinyl acetate; amide group-containing vinyl monomers, such as (meth)acrylamide, N-isopropyl(meth)acrylamide, N-butyl (meth)acrylamide, N,N-diethyl(meth)acrylamide, N,N-dimethyl(meth)acrylamide, N-methylol(meth)acrylamide, N-ethylol (meth)acrylamide, N-methylolpropane(meth)acrylamide, N-methoxyethyl(meth)acrylamide, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth) acryloylpiperidine, N-(meth)acryloylpyrrolidine, N-vinyl morpholine, N-vinyl pyrazole, N-vinyl isoxazole, N-vinyl thiazole, N-vinyl isothiazole, and N-vinyl pyridazine; N-vinyl carboxylic acid amides; lactam monomers, such as N-vinyl caprolactam; cyanoacrylate monomers, such as (meth)acrylonitrile; (meth)acrylic acid aminoalkyl monomers, such as (meth) acrylic acid aminoethyl, (meth)acrylic acid N,N-dimethylaminoethyl, (meth)acrylic acid N,N-dimethylaminoethyl, and (meth)acrylic acid t-butylaminoethyl; imide group-containing monomers, such as cyclohexyl maleimide and isopropyl maleimide; isocyanate group-containing monomers, such as 2-isocyanate ethyl (meth) acrylate; organic silicon-containing vinyl monomers, such as vinyltrimethoxysilane, $\gamma$-methacryloxpropyl trimethoxy silane, allyltrimethoxysilane, trimethoxysilylpropylallylamine, and 2-methoxy ethoxy trimethoxy silane; hydroxyl group-containing monomers, such as (meth) acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth) acrylic acid hydroxylauryl, and (4-hydroxymethyl cyclohexyl)methyl methacrylate; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; olefins or dienes, such as ethylene, butadiene, isoprene, and isobutylene; vinyl ethers, such as vinyl alkyl ether; vinyl chloride; and others, such as macro-monomers having a radically polymerizable vinyl group at the monomer end to which a vinyl group has been polymerized, etc. These monomers can be copolymerized, alone or in combination thereof, with the (meth) acrylic acid ester having a terpene structure.

In the acrylic pressure-sensitive adhesive composition according to the present embodiment, specific examples of the (meth) acrylic polymer (G) include, for example, copolymers of the aforementioned (meth)acrylic acid ester having a terpene structure with: dicyclopentanyl methacrylate (DCPMA), cyclohexyl methacrylate (CHMA), isobornyl methacrylate (IBXMA), isobornyl acrylate (IBXA), dicyclopentanyl acrylate (DCPA), 1-adamantyl methacrylate (ADMA), 1-adamantyl acrylate (ADA), CHA (cyclohexyl acrylate), isobutyl methacrylate (IBMA), and methyl methacrylate (MMA).

A functional group reactive with an epoxy group or an isocyanate group may be further introduced into the (meth) acrylic polymer (G). Examples of such a functional group include a hydroxyl group, carboxyl group, amino group, amide group, and a mercapto group. When the (meth) acrylic polymer (G) is produced, it is preferable to use a monomer having such a functional group.

When a copolymer between the (meth)acrylic acid ester having a terpene structure and another (meth) acrylic acid ester monomer or a copolymerizable monomer is used as the (meth) acrylic polymer (G), the content of the (meth) acrylic acid ester having a terpene structure is within a range of 10% by mass to 100% by mass, preferably within a range of 20% by mass to 100% by mass, and more preferably within a range of 25% by mass to 100% by mass, based on the total mass of the whole monomers that form the (meth)acrylic polymer (G). When 10% by mass or more of the (meth) acrylic acid ester having a terpene structure is contained, the pressure-sensitive adhesive force of the acrylic pressure-sensitive adhesive tape to adherends including an adherend having low polarity can be improved.

The weight average molecular weight of the (meth)acrylic polymer (G) is 1000 or more and less than 30000, preferably 1500 or more and less than 20000, and more preferably 2000 or more and less than 10000. If the molecular weight is 30000 or more, there are sometimes the cases where the effect of improving the pressure-sensitive adhesive force of the pressure-sensitive adhesive tape cannot be sufficiently obtained. Conversely, if the molecular weight is less than 1000, there are sometimes the cases where, because the molecular weight is too small, the pressure-sensitive adhesive force or holding property of the pressure-sensitive adhesive tape is decreased.

The weight average molecular weight of the acrylic polymer (F) or the (meth) acrylic polymer (G) can be determined by a GPC method in terms of polystyrene. Specifically, the weight average molecular weight can be measured by using HPLC8020 and two TSKgel GMH-Hs(20) as columns, which are made by Tosoh Corporation, and under conditions in which a tetrahydrofuran solvent is used and a flow rate is approximately 0.5 ml/min.

As stated above, the content of the (meth)acrylic polymer (G) is within a range of 1 to 70 parts by mass based on 100 parts by mass of the acrylic polymer (F); however, the content is preferably within a range of 2 to 50 parts by mass, and more preferably within a range of 3 to 40 parts by mass. If the (meth) acrylic polymer (G) is added in an amount more than 70 parts by mass, the elastic modulus of a pressure-sensitive adhesive layer formed of the acrylic pressure-sensitive adhesive composition according to the present embodiment becomes large, and hence there are sometimes the cases where the adhesiveness at a low-temperature is deteriorated or the pressure-sensitive adhesive force is not exerted even at room temperature. Conversely, if the addition amount thereof is less than 1 part by mass, there are sometimes the cases where the effect of adding the (meth)acrylic polymer (G) cannot be obtained.

[ The glass transition temperature (Tg) of the (meth) acrylic polymer (G) is 0°C or higher to 300°C or lower, preferably 20°C or higher to 300°C or lower, and more preferably 40°C or higher to 300°C or lower. By making the glass transition temperature (Tg) to be 20°C or higher, the cohesive force of the pressure-sensitive adhesive layer, occurring at a temperature higher than or equal to room temperature, can be improved, and the holding property and adhesiveness occurring at a high temperature can also be improved. The glass transition temperatures of typical materials that can be used as the (meth) acrylic polymer (G) in the present embodiment are shown in Table 4. The glass transition temperatures shown there are nominal values described in documents or catalogs, etc. , or values calculated based on the following Equation (6) (Fox Equation). As stated above, the (meth)acrylic polymer (G) contains, as a monomer, the (meth) acrylic acid ester having a terpene structure.

$$1/Tg = W1/Tg1 + W2/Tg2 + *** + Wn/Tgn \qquad (6)$$

[wherein, Tg represents the glass transition temperature of the (meth)acrylic polymer (G) (unit: K), Tgi (i= 1, 2, *** , n) represents the glass transition temperature of a homopolymer that is formed of a monomer i (unit: K), and Wi (i= 1, 2, *** , n) represents the mass fraction of the monomer i in the whole monomer components]. The above Equation (6) is adopted when the (meth)acrylic polymer (G) is formed of n types of monomer components of monomer 1, monomer 2, *** , monomer n.

Herein, the "glass transition temperature of a homopolymer that is formed" means the "glass transition temperature of a homopolymer formed of the monomer", i.e., means the glass transition temperature (Tg) of a polymer that is formed only of a monomer (sometimes referred to as a "monomer X") as a monomer component. Specifically, the glass transition temperature (Tg) is described in "Polymer Handbook" (3rd edition, John Wiley & Sons, Inc, 1989). The glass transition temperature (Tg) of a homopolymer, which is not described in the aforementioned document, means a value obtained, for example, by the following measuring method. That is, after 100 parts by mass of a monomer X, 0.2 parts by mass of 2,2'-azobisisobutyronitrile, and 200 parts by mass of ethyl acetate as a polymerization solvent are placed into a reactor provided with a thermometer, stirrer, nitrogen inlet pipe, and reflux cooling pipe, they are stirred for 1 hour while nitrogen gas is being introduced. After the oxygen in the polymerization system has been removed in such a way, the mixture is heated to 63°C and is reacted together for 10 hours. Subsequently, the mixture is cooled to room temperature to obtain a homopolymer solution having a solid content of 33% by mass. Subsequently, this homopolymer solution is casted and coated onto a release liner, which is then dried to produce a test sample having a thickness of approximately 2 mm (sheet-shaped homopolymer). Approximately 1 to 2 mg of this test sample are weighed into an aluminum open cell, and the Reversing Heat Flow (specific heat component) behaviors of the homopolymer are obtained

by using a temperature-modulated DSC (product name: "Q-2000", made by TA Instruments) under a nitrogen environment of 50 ml/min and at a rate of temperature increase of 5°C/min. With reference to JIS-K-7121, the temperature at the point where the straight line, which is located in the vertical axis direction at the same distance from both the straight line obtained by extending the base line on the low temperature side of the obtained Reversing Heat Flow and the straight line obtained by extending the base line on the high temperature side thereof, and the curved line in a portion where the glass transition temperature is changed in a stepwise pattern intersect with each other is made to be the glass transition temperature (Tg), assuming that it is a homopolymer.

[Table 4]

| COMPOSITION OF (METH) ACRYLIC POLYMER (B) | Tg(°C) | REMARKS |
|---|---|---|
| DCPMA | 175 | VALUE DESCRIBED IN DOCUMENTS, ETC. |
| DCPA | 120 | VALUE DESCRIBED IN DOCUMENTS, ETC. |
| IBXMA | 173 | VALUE DESCRIBED IN DOCUMENTS, ETC. |
| IBXA | 97 | VALUE DESCRIBED IN DOCUMENTS, ETC. |
| CHMA | 66 | VALUE DESCRIBED IN DOCUMENTS, ETC. |
| CHA | 15 | VALUE DESCRIBED IN DOCUMENTS, ETC. |
| IBMA | 48 | VALUE DESCRIBED IN DOCUMENTS, ETC. |
| MMA | 105 | VALUE DESCRIBED IN DOCUMENTS, ETC. |
| ADMA | 250 | VALUE DESCRIBED IN DOCUMENTS, ETC. |
| ADA | 153 | VALUE DESCRIBED IN DOCUMENTS, ETC. |
| HCPA | 65 | VALUE DESCRIBED IN DOCUMENTS, ETC. |
| HCPMA | 115 | VALUE DESCRIBED IN DOCUMENTS, ETC. |
| CHMA/IBMA = 60/40 | 59 | CALCULATED VALUE (BASED ON Fox EQUATION) |

The abbreviations in Table 4 represent the following compounds.

DCPMA: Dicyclopentanyl Methacrylate
DCPA: Dicyclopentanyl Acrylate
IBXMA: Isobornyl Methacrylate
IBXA: Isobornyl Acrylate
CHMA: Cyclohexyl Methacrylate
CHA: Cyclohexyl Acrylate
IBMA: Isobutyl Methacrylate
MMA: Methyl Methacrylate
ADMA: 1-Adamantyl Methacrylate
ADA: 1-Adamantyl Acrylate
HCPA: Hydrogenated Terpene Acrylate
HCPMA: Hydrogenated Terpene Methacrylate

<Method of Producing (Meth)Acrylic Polymer (G)>

The (meth) acrylic polymer (G) can be produced, for example, by subjecting the (meth) acrylic monomer having the aforementioned structure to polymerization with the use of a solution polymerization method, bulk polymerization method, emulsion polymerization method, suspension polymerization, and block polymerization, etc.

<Method of Adjusting Molecular Weight of (Meth)Acrylic Polymer (G) >

In order to adjust the molecular weight of the (meth) acrylic polymer (G), a chain transfer agent can be used while the polymer (G) is being polymerized. Examples of the chain transfer agent to be used include: compounds having

a mercapt group, such as octylmercaptan, dodecyl mercaptan, t-dodecyl mercaptan, and mercaptoethanol; thioglycolic acid, methyl thioglycolate, ethyl thioglycolate, propyl thioglycolate, butyl thioglycolate, t-butyl thioglycolate, 2-ethylhexyl thioglycolate, octyl thioglycolate, isooctyl thioglycolate, decyl thioglycolate, dodecyl thioglycolate, thioglycolic acid esters of: 3-mercapto-1 propanol; 3-mercapto-1,3-propanediol; and ethylene glycol, thioglycolic acid ester of neopentyl glycol, and thioglycolic acid ester of pentaerythritol.

The use amount of the chain transfer agent is not particularly limited, but the chain transfer agent is usually contained in an amount within a range of 0.1 to 20 parts by mass, preferably within a range of 0.2 to 15 parts by mass, and more preferably within a range of 0.3 to 10 parts by mass, based on 100 parts by mass of the (meth) acrylic monomer. By adjusting the addition amount of the chain transfer agent, as stated above, a (meth) acrylic polymer (G) having a preferred molecular weight can be obtained. The chain transfer agent can be used alone or in combination of two or more thereof.

The acrylic pressure-sensitive adhesive composition according to the present embodiment can contain, as essential components, the aforementioned acrylic polymer (F) and (meth) acrylic polymer (G) and can contan, as optional components, various additives that are generally used in the field of pressure-sensitive adhesive compositions. A tackifying resin, plasticizer, softener, filler, colorant (pigment, dye, or the like), antioxidant, leveling agent, stabilizer, and antiseptic, etc., are exemplified as such optional components. Such additives that are conventionally and publicly known can be used by ordinary methods.

In the acrylic pressure-sensitive adhesive layer containing: the acrylic polymer (F) as a pressure-sensitive adhesive composition; and the (meth) acrylic polymer (G) that has a terpene structure in its side chain and that has a weight average molecular weight of 1000 or more and less than 30000, the ratio of the solvent-insoluble component is within a range of 40 to 90% by mass, and preferably within a range of 45 to 85% by mass. If the ratio of the solvent-insoluble component is less than 40% by mass, the cohesive force becomes insufficient, and accordingly there are sometimes the cases where the holding property cannot be met. Conversely, if the ratio thereof is more than 90% by mass, the cohesive force becomes too large, and accordingly there are sometimes the cases where the pressure-sensitive adhesive force or resistance to resilience is decreased. A method of evaluating the ratio of the solvent-insoluble component will be described later.

Subsequently, the structure of an acrylic pressure-sensitive adhesive tape (or acrylic pressure-sensitive adhesive sheet) having a pressure-sensitive adhesive layer containing an acrylic pressure-sensitive adhesive composition with the aforementioned composition, will be described.

The acrylic pressure-sensitive adhesive tape according to the present embodiment comprises a pressure-sensitive adhesive layer containing an acrylic pressure-sensitive adhesive composition. The acrylic pressure-sensitive adhesive tape may be a so-called pressure-sensitive adhesive tape comprising a substrate, in which such a pressure-sensitive adhesive layer is provided on one or both surfaces of a sheet-shaped substrate (supporting body) in a fixed manner, i.e., without an intention of separating the pressure-sensitive adhesive layer from the substrate; or may be a so-called substrate-less pressure-sensitive adhesive tape in which the pressure-sensitive adhesive layer is provided on a substrate having a release property, such as a release liner (release paper, resin sheet whose surface has been subjected to a release treatment, or the like), so that the substrate for supporting the pressure-sensitive adhesive layer is removed when the tape is attached. The concept of the pressure-sensitive adhesive tape described herein can involve objects referred to as a pressure-sensitive adhesive sheet, pressure-sensitive adhesive label, and pressure-sensitive adhesive film, etc. The pressure-sensitive adhesive layer should not be limited to one continuously formed, but may be one formed into a regular pattern, such as, for example, a dot shape and a stripe shape, or formed into a random pattern.

The aforementioned substrate can be formed of a material appropriately selected, in accordance with the application of the pressure-sensitive adhesive tape, from the group consisting of, for example: plastic films, such as a polypropylene film, ethylene-propylene copolymer film, polyester film, and polyvinylchloride film; foam substrates, such as a polyurethane foam and polyethylene foam; paper, such as craft paper, crepe paper, and Japanese paper; cloth, such as cotton cloth and staple fiber cloth; nonwoven cloth, such as polyester nonwoven fabric and vinylon nonwoven fabric; metallic foils, such as aluminum foil and copper foil; and the like. As the aforementioned plastic films, both of a non-oriented film and an oriented (uniaxially oriented or biaxially oriented) film can be used. The surface of the substrate on which the pressure-sensitive adhesive layer is to be provided may be coated with a primer or be subjected to a surface treatment, such as a corona discharge treatment. The thickness of the substrate can be appropriately selected in accordance with the purpose, but is generally within a range of approximately 10 $\mu$m to approximately 500 $\mu$m (typically within a range of 10 $\mu$m to 200 $\mu$m).

The pressure-sensitive adhesive layer can be a layer in which the acrylic pressure-sensitive adhesive composition has been cured. That is, the pressure-sensitive adhesive layer can be formed by providing the acrylic pressure-sensitive adhesive composition to an appropriate substrate (e.g., coating) and then by appropriately subjecting the composition to a curing treatment. When two or more types of curing treatments (drying, cross-link formation, polymerization, etc.) are performed, these treatments can be performed simultaneously or in multiple stages. In the case of the pressure-sensitive adhesive composition in which a partial polymer (acrylic polymer syrup) has been used, a final

copolymerization reaction is typically performed as the curing treatment (the partial polymer is subjected to a further copolymerization reaction to form a complete polymer). For example, in the case of a photo-curing pressure-sensitive adhesive composition, light radiation is performed. A curing treatment, such as cross-link formation, drying, or the like, may be performed, if necessary. For example, when a photo-curing pressure-sensitive adhesive composition needs to be dried, light radiation may be performed after the drying of the composition. In the case of the pressure-sensitive adhesive composition in which a complete polymer has been used, a treatment, such as drying (drying by heating), cross-link formation, or the like, is typically performed as the curing treatment, if necessary.

Coating of the acrylic pressure-sensitive adhesive composition can be performed by using a commonly-used coater, such as, for example, a gravure roll coater, reverse roll coater, kiss roll coater, dip roll coater, bar coater, knife coater, spray coater, or the like. In the case of the pressure-sensitive adhesive tape comprising a substrate, a pressure-sensitive adhesive layer may be formed by directly providing a pressure-sensitive adhesive composition to the substrate, or a pressure-sensitive adhesive layer formed on a release liner may be transferred to the substrate.

The thickness of the pressure-sensitive adhesive layer is not particularly limited, but is usually larger than or equal to, for example, 10 μm, preferably larger than or equal to 20 μm, and more preferably larger than or equal to 30 μm. Thereby, sufficient adhesiveness can be achieved. The thickness of the pressure-sensitive adhesive layer is appropriately set to be, for example, within a range of approximately 10 to approximately 250 μm.

The acrylic pressure-sensitive adhesive tape according to the present embodiment can be preferably used in the application in which members made of both various resins including, for example, PE (polyethylene), PP (polypropylene), ABS (acrylonitrile-butadiene-styrene copolymer), SBS (styrene-butadiene-styrene blockcopolymer), PC (polycarbonate), PVC (vinyl chloride), and an acrylic resin, such as PMMA (polymethyl methacrylate resin), and metals, such as SUS and aluminum, are joined (fixed) to the surfaces of automobiles (coatings of the bodies), house and building materials, and home electronic appliances, etc.

Because the acrylic pressure-sensitive adhesive tape according to the present embodiment is also excellent in transparency, the tape can be preferably used in the application in which various optical members are attached to, for example, liquid crystal cells, optical polyester films, and touch panel members, etc. Accordingly, the technique described herein includes a laminated body in which the pressure-sensitive adhesive layer containing the acrylic pressure-sensitive adhesive composition is provided in the optical member. This laminated body typically has an aspect in which the pressure-sensitive adhesive layer on the optical member is protected by a release liner. The optical member in which such a pressure-sensitive adhesive layer is provided can be easily attached to the surface, etc. , of a plastic cover lens panel, glass, or liquid crystal cell. The optical member is not particularly limited, but can be a polarizing film, phase difference film, transparent conductive film (ITO film), etc. Such an optical member may have a single-layer structure made of the same material, or may have a multiple-layer structure made of a plurality of materials. As a method of forming the pressure-sensitive adhesive layer on the optical member, a method of directly providing the pressure-sensitive adhesive layer thereto or a method of transferring the pressure-sensitive adhesive layer thereto can be appropriately adopted, in the same way as in the case where the pressure-sensitive adhesive layer is formed on a substrate. Typically, the pressure-sensitive adhesive layer formed on a release liner is transferred to the base surface of the optical member.

As stated above, the acrylic pressure-sensitive adhesive composition according to the present embodiment contains: the acrylic polymer (F) as a pressure-sensitive adhesive composition; and the acrylic polymer (G) that has a terpene structure in its side chain and that has a weight average molecular weight of 1000 or more and less than 30000, as a tackifying resin. Thereby, when a pressure-sensitive adhesive layer is formed by using the acrylic press-re-sensitive adhesive composition, the adhesiveness of the acrylic pressure-sensitive adhesive tape to an adherend having low polarity can be improved; which finally leads to the fact that the adhesion reliability of the acrylic pressure-sensitive adhesive tape to various adherends each having surface polarity different from others, including an adherend having low polarity, can be improved, thereby allowing the acrylic pressure-sensitive adhesive tape to be used for various joint applications in the

It is assumed that, because the (meth) acrylic polymer (G) having a terpene structure in its side chain is compatible with the acrylic polymer (F), both the adhesiveness of the acrylic pressure-sensitive adhesive tape to an adherend having low polarity and the transparency of the tape are improved.

The acrylic pressure-sensitive adhesive composition according to the present embodiment can be designed so as not to contain an acidic group in the monomer that forms the acrylic polymer (F). In this case, an acrylic pressure-sensitive adhesive tape can be obtained, in which an influence of metallic corrosion that is caused by an acidic group, etc. , has been reduced. Even when the monomer that forms the acrylic polymer (F) contains an acidic group, the adhesiveness of the acrylic pressure-sensitive adhesive tape can be similarly improved.

## Examples

Hereinafter, the present invention will be described in detail based on Examples, but the invention should not

be limited at all by these Examples.

Components of the acrylic pressure-sensitive adhesive composition according to Examples 2-1 to 2-9 and Comparative Examples 2-1 to 2-7 are shown in Table 5.

[Table 5]

| | ACRYLIC POLYMER (A) 100 PARTS BY MASS | (METH) ACRYLIC POLYMER (B) | | | | CROSS-LINKING AGENT (TMPTA) (PARTS BY MASS) | RATIO OF SOLVENT-INSOLUBLE COMPONENT (% BY MASS) |
|---|---|---|---|---|---|---|---|
| | | | Mw | Ig | PARTS BY MASS | | |
| EXAMPLE 2-1 | 2EHA/NVP=86/14 | HCPMA | 3500 | 115 | 20 | 0.14 | 74.5 |
| EXAMPLE 2-2 | 2EHA/NVP/AA=84/14/2 | HCPMA | 3500 | 115 | 20 | 0.10 | 69.8 |
| EXAMPLE 2-3 | 2EHA/NVP=86/14 | HCPMA/ DCPMA=50/50 | 3400 | 143 | 20 | 0.10 | 66.7 |
| EXAMPLE 2-4 | 2EHA/NVP=86/14 | HCPA/DCPMA=50/50 | 3400 | 112 | 20 | 0.14 | 76.7 |
| EXAMPLE 2-5 | 2EHA/NVP/AA=85/14/1 | HCPMA/ DCPMA=50/50 | 3400 | 143 | 20 | 0.08 | 58.1 |
| EXAMPLE 2-6 | 2EHA/NVP/AA=85/14/1 | HCPA/DCPMA=50/50 | 3400 | 112 | 20 | 0.06 | 61.4 |
| EXAMPLE 2-7 | 2EHA/AA=94/6 | HCPMA | 3500 | 115 | 20 | 0.10 | 62.5 |
| EXAMPLE 2-8 | 2EHA/AA=94/6 | HCPMA/ DCPMA=50/50 | 3400 | 115 | 20 | 0.16 | 69.3 |
| EXAMPLE 2-9 | 2EHA/AA=94/6 | HCPA/DCPMA=50/50 | 3400 | 112 | 20 | 0.08 | 63.3 |
| COMPARTIVE EXAMPLE 2-1 | 2EHA/NVP=86/14 | - | | | | (HDDA)0.045 | 77.4 |
| COMPARATIVE EXAMPLE 2-2 | 2EHA/AA=94/6 | - | | | | (HDDA)0.07 | 75.2 |
| COMPARATIVE EXAMPLE 2-3 | 2EHA/NVP=86/14 | CHMA/IBMA=60/40 | 4000 | 59 | 20 | 0.12 | 73.4 |
| COMPARATIVE EXAMPLE 2-4 | 2EHA/AA=94/6 | CHMA/IBMA=60/40 | 4000 | 59 | 20 | 0.14 | 67.3 |
| COMPARATIVE EXAMPLE 2-5 | 2EHA/AA-94/6 | Clearon P135 | - | - | 20 | 0.20 | 49.1 |
| COMPARATIVE EXAMPLE 2-6 | 2EHA/AA/HCPA=78/5/17 | - | | | | 0.04 | 67.2 |
| COMPARATIVE EXAMPLE 2-7 | 2EHA/NVP/ HCPA=72/11/17 | - | | | | 0.06 | 72.4 |

The abbreviations in Table 5 represent the following compounds.

2EHA: 2-Ethylhexyl Acrylate
NVP: N-Vinyl-2-pyrrolidone
AA: Acrylic Acid
DCPMA: Dicyclopentanyl Methacrylate
CHMA: Cyclohexyl Methacrylate
IBMA: Isobutyl Methacrylate
TMPTA: Trimethylolpropane Triacrylate
HDDA: 1,6-Hexanediol Diacrylate
HCPMA: Hydrogenated Terpene methacrylate
HCPA: Hydrogenated terpene Acrylate
Clearon P135: Hydrogenated Terpene Resin made by YASUHARA CHEMICAL CO.

(Measurement of Ratio of Solvent-Insoluble Component)

A ratio of a solvent-insoluble component was determined in the following way: after 0.1 g of a pressure-sensitive adhesive composition was sampled and precisely weighed (mass before dipping), the sampled layer was dipped in 50 ml of ethyl acetate at room temperature (20 to 25°C) for 1 week; a solvent (ethyl acetate) insoluble portion was taken out to be dried at 130°C for 2 hours and then weighed (mass after dipping and drying) ; and the ratio was calculated by using an equation for calculating the ratio "solvent insoluble ratio (mass%) = [(mass after dipping and drying)/(mass before dipping)] x 100".

(Preparation of Acrylic Polymer Syrup 1 (2EHA/NVP = 86/14) as (F) Component)

Eighty six parts by mass of 2-ethylhexyl acrylate (2EHA), 14 parts by mass of N-vinyl-2-pyrrolidone (NVP), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 1) having a rate of polymerization of approximately 8% by mass was obtained by exposing the mixture to UV rays under a nitrogen atmosphere such that the mixture was partially photopolymerized.

(Preparation of Acrylic Polymer Syrup 2 (2EHA/AA = 94/6) as (F) Component)

Ninety four parts by mass of 2-ethylhexyl acrylate (2EHA), 6 parts by mass of acrylic acid (AA), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 2) having a rate of polymerization of approximately 8% by mass was obtained by exposing the mixture to UV rays under a nitrogen atmosphere such that the mixture was partially photopolymerized.

(Preparation of Acrylic Polymer Syrup 3 (2EHA/NVP/AA = 84/14/2) as (F) Component)

Eighty four parts by mass of 2-ethylhexyl acrylate (2EHA), 14 parts by mass of N-vinyl-2-pyrrolidone (NVP), 2 parts by mass of acrylic acid (AA), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 3) having a rate of polymerization of approximately 8% by mass was obtained by exposing the mixture to UV rays under a nitrogen atmosphere such that the mixture was partially photopolymerized.

(Preparation of Acrylic Polymer Syrup 4 (2EHA/NVP/AA = 85/14/1) as (F) Component)

Eighty five parts by mass of 2-ethylhexyl acrylate (2EHA), 14 parts by mass of N-vinyl-2-pyrrolidone (NVP), 1 part by mass of acrylic acid (AA), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 4) having a rate of polymerization of approximately 8% by mass was obtained by exposing the mixture to UV rays under a nitrogen atmosphere such that the mixture was partially photopolymerized.

(Preparation of Acrylic Polymer Syrup 5 (2EHA/AA/HCPA = 78/5/17) as (F) Component)

Seventy eight parts by mass of 2-ethylhexyl acrylate (2EHA), 5 parts by mass of acrylic acid (AA), 17 parts by mass of hydrogenated terpene methacrylate (following chemical formula (4), product name: HCPA, made by YASUHARA CHEMICAL CO.), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 5) having a rate of polymerization of approximately 8% by mass was obtained by exposing the mixture to UV rays under a nitrogen atmosphere such that the mixture was partially photopolymerized.

[Formula 15]

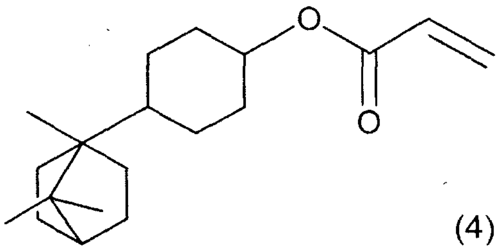

(4) HCPA

(Preparation of Acrylic Polymer Syrup 6 (2EHA/NVP/HCPA = 72/11/17) as (F) Component)

Seventy eight parts by mass of 2-ethylhexyl acrylate (2EHA), 11 parts by mass of N-vinyl-2-pyrrolidone (NVP), 17 parts by mass of hydrogenated terpene mrthacrylate (above chemical formula (4), product name: HCPA, made by YASUHARA CHEMICAL CO.), 0.05 parts by mass of a photo-polymerization initiator (product name: IRGACURE 184, made by BASF), and 0.05 parts by mass of a photo-polymerization initiator (product name: IRGACURE 651, made by BASF) were placed into a 4-neck flask. A partial polymer (acrylic polymer syrup 6) having a rate of polymerization of approximately 8% by mass was obtained by exposing the mixture to UV rays under a nitrogen atmosphere such that the mixture was partially photopolymerized.

(Preparation of (Meth)Acrylic Polymer 1 (HCPMA) as (G) Component)

One hundred parts by mass of toluene, 100 parts by mass of hydrogenated terpene methacrylate (following chemical formula (5), product name: HCPMA, made by YASUHARA CHEMICAL CO.), and 3 parts by mass of thioglycolic acid (GSH acid), as a chain transfer agent, were placed into a 4-neck flask. After they were stirred under a nitrogen atmosphere at 70°C for 1 hour, 0.2 parts by mass of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 1 to be obtained. The glass transition temperature of the obtained (meth) acrylic polymer 1 was 115°C and the weight average molecular weight thereof was 3500.

[Formula 16]

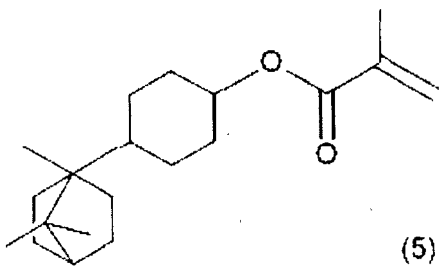

(5) HCPMA

(Preparation of (Meth)Acrylic Polymer 2 (HCPMA/DCPMA = 50/50) as (G) Component)

One hundred parts by mass of toluene, 50 parts by mass of hydrogenated terpene methacrylate (above chemical formula (5), product name: HCPMA, made by YASUHARA CHEMICAL CO.), 50 parts by mass of dicyclopentanyl methacrylate (DCPMA) (product name: FA-513M, made by Hitachi Chemical Co. , Ltd.), and 3 parts by mass of thioglycolic acid (GSH acid), as a chain transfer agent, were placed into a 4-neck flask. After they were stirred under a nitrogen atmosphere at 70°C for 1 hour, 0.2 parts by mass of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 2 to be obtained. The glass transition temperature of the obtained (meth) acrylic polymer 2 was 143°C and the weight average molecular weight thereof was 3400.

(Preparation of (Meth)Acrylic Polymer 3 (HCPA/DCPMA = 50/50) as (G) Component)

One hundred parts by mass of toluene, 50 parts by mass of hydrogenated terpene methacrylate (above chemical formula (4), product name: HCPMA, made by YASUHARA CHEMICAL CO.), 50 parts by mass of dicyclopentanyl methacrylate (DCPMA) (product name: FA-513M, made by Hitachi Chemical Co. , Ltd.), and 3 parts by mass of thioglycolic acid (GSH acid), as a chain transfer agent, were placed into a 4-neck flask. After they were stirred under a nitrogen atmosphere at 70°C for 1 hour, 0.2 parts by mass of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 1 to be obtained. The glass transition temperature of the obtained (meth) acrylic polymer 3 was 112°C and the weight average molecular weight thereof was 3400.

(Preparation of (Meth)Acrylic Polymer 4 (CHMA/IBMA = 60/40) as (G) Component)

After cyclohexyl methacrylate (CHMA, 60 parts by mass), isobutyl methacrylate (IBMA, 40 parts by mass), and thioglycolic acid (4.0 parts by mass) were combined, dissolved oxygen was removed by blowing nitrogen gas thereinto. After the mixture was heated to 90°C, PERHEXYL O (made by NOF CORPORATION, 0.005 parts by mass) and PERHEXYL D (made by NOF CORPORATION, 0.01 parts by mass) were mixed. After being further stirred at 90°C for 1 hour, the mixture was heated to 150°C in 1 hour and stirred at the temperature for 1 hour. Subsequently, the mixture was heated to 170°C in 1 hour and stirred at the temperature for 60 minutes.

The pressure under which the mixture was placed was reduced at 170°C and the mixture was stirred for 1 hour to remove remaining monomers, thereby allowing (meth) acrylic polymer 4 to be obtained. The glass transition temperature of the obtained (meth)acrylic polymer 1 was 59°C (calculated by Fox Equation) and the weight average molecular weight thereof was 4000.

(Example 2-1)

(Preparation of Acrylic Pressure-Sensitive Adhesive Composition)

After 20 parts by mass of the aforementioned (meth) acrylic polymer 1 and 0.14 parts by mass of trimethylolpropane triacrylate were added to 100 parts by mass of the aforementioned acrylic polymer syrup 1, these were uniformly mixed together to prepare an acrylic pressure-sensitive adhesive composition.

(Production of Pressure-Sensitive Adhesive Layer Sheet)

A coated layer having a final thickness of 50 μm was formed by coating the aforementioned acrylic pressure-sensitive adhesive composition on one of the surfaces of a polyester film having a thickness of 38 μm (product name: Diafoil MRF, made by Mitsubishi Plastics Inc.), the one of the surfaces having been subjected to a release treatment with silicone. Subsequently, the surface of the coated acrylic pressure-sensitive adhesive composition was covered with one of the surfaces of a polyester film having a thickness of 38 μm (product name: Diafoil MRN, made by Mitsubishi Plastics Inc.), the one of the surfaces having been subjected to a release treatment with silicone, so that the one of the surfaces of the film was located near to the coated layer. Thereby, oxygen was blocked from the coated layer of the acrylic pressure-sensitive adhesive composition (pressure-sensitive adhesive layer). The pressure-sensitive adhesive layer sheet thus obtained was irradiated, for 360 seconds, with UV rays with an illumination intensity of 5 $mW/cm^2$

(measured by TOPCON UVR-T1 having a maximum sensitivity at 350 nm), the UV rays being created by using a black light lamp (made by TOSHIBA CORPORATION). The ratio of the solvent-insoluble component of the pressure-sensitive adhesive layer made of the acrylic pressure-sensitive adhesive composition thus obtained was 74.5% by mass. The polyester film covering each of the surfaces of the pressure-sensitive adhesive layer functions as a release liner.

(Example 2-2)

An acrylic pressure-sensitive adhesive composition and a pressure-sensitive adhesive layer sheet were obtained in the same way as in Example 2-1, except that 20 parts by mass of the aforementioned (meth) acrylic polymer 1 and 0.10 parts by mass of trimethylolpropane triacrylate were added to 100 parts by mass of the aforementioned acrylic polymer syrup 3. The ratio of the solvent-insoluble component of the obtained pressure-sensitive adhesive layer was 69.8% by mass.

(Example 2-3)

An acrylic pressure-sensitive adhesive composition and a pressure-sensitive adhesive layer sheet were obtained in the same way as in Example 2-1, except that 20 parts by mass of the aforementioned (meth) acrylic polymer 2 and 0.10 parts by mass of trimethylolpropane triacrylate were added to 100 parts by mass of the aforementioned acrylic polymer syrup 1. The ratio of the solvent-insoluble component of the obtained pressure-sensitive adhesive layer was 66.7% by mass.

(Example 2-4)

An acrylic pressure-sensitive adhesive composition and a pressure-sensitive adhesive layer sheet were obtained in the same way as in Example 2-1, except that 20 parts by mass of the aforementioned (meth) acrylic polymer 3 and 0.14 parts by mass of trimethylolpropane triacrylate were added to 100 parts by mass of the aforementioned acrylic polymer syrup 1. The ratio of the solvent-insoluble component of the obtained pressure-sensitive adhesive layer was 76.7% by mass.

(Example 2-5)

An acrylic pressure-sensitive adhesive composition and a pressure-sensitive adhesive layer sheet were obtained in the same way as in Example 2-1, except that 20 parts by mass of the aforementioned (meth) acrylic polymer 2 and 0.08 parts by mass of trimethylolpropane triacrylate were added to 100 parts by mass of the aforementioned acrylic polymer syrup 4. The ratio of the solvent-insoluble component of the obtained pressure-sensitive adhesive layer was 58.1% by mass.

(Example 2-6)

An acrylic pressure-sensitive adhesive composition and a pressure-sensitive adhesive layer sheet were obtained in the same way as in Example 2-1, except that 20 parts by mass of the aforementioned (meth) acrylic polymer 3 and 0.06 parts by mass of trimethylolpropane triacrylate were added to 100 parts by mass of the aforementioned acrylic polymer syrup 4. The ratio of the solvent-insoluble component of the obtained pressure-sensitive adhesive layer was 61.4% by mass.

(Example 2-7)

An acrylic pressure-sensitive adhesive composition and a pressure-sensitive adhesive layer sheet were obtained in the same way as in Example 2-1, except that 20 parts by mass of the aforementioned (meth) acrylic polymer 1 and 0.10 parts by mass of trimethylolpropane triacrylate were added to 100 parts by mass of the aforementioned acrylic polymer syrup 2. The ratio of the solvent-insoluble component of the obtained pressure-sensitive adhesive layer was 62.5% by mass.

(Example 2-8)

An acrylic pressure-sensitive adhesive composition and a pressure-sensitive adhesive layer sheet were obtained in the same way as in Example 2-1, except that 20 parts by mass of the aforementioned (meth) acrylic polymer 2 and 0.16 parts by mass of trimethylolpropane triacrylate were added to 100 parts by mass of the aforementioned

acrylic polymer syrup 2. The ratio of the solvent-insoluble component of the obtained pressure-sensitive adhesive layer was 69.3% by mass.

(Example 2-9)

An acrylic pressure-sensitive adhesive composition and a pressure-sensitive adhesive layer sheet were obtained in the same way as in Example 2-1, except that 20 parts by mass of the aforementioned (meth) acrylic polymer 3 and 0.08 parts by mass of trimethylolpropane triacrylate were added to 100 parts by mass of the aforementioned acrylic polymer syrup 2. The ratio of the solvent-insoluble component of the obtained pressure-sensitive adhesive layer was 63.3% by mass.

(Comparative Example 2-1)

An acrylic pressure-sensitive adhesive composition and a pressure-sensitive adhesive layer sheet were obtained in the same way as in Example 2-1, except that 0.45 parts by mass of 1,6-hexanediol diacrylate were added to 100 parts by mass of the aforementioned acrylic polymer syrup 1. The ratio of the solvent-insoluble component of the obtained pressure-sensitive adhesive layer was 77.4% by mass.

(Comparative Example 2-2)

An acrylic pressure-sensitive adhesive composition and a pressure-sensitive adhesive layer sheet were obtained in the same way as in Example 2-1, except that 0.07 parts by mass of 1, 6-hexanediol diacrylate were added to 100 parts by mass of the aforementioned acrylic polymer syrup 2. The ratio of the solvent-insoluble component of the obtained pressure-sensitive adhesive layer was 75.2% by mass.

(Comparative Example 2-3)

An acrylic pressure-sensitive adhesive composition and a pressure-sensitive adhesive layer sheet were obtained in the same way as in Example 2-1, except that 20 parts by mass of the aforementioned (meth) acrylic polymer 4 and 0.12 parts by mass of trimethylolpropane triacrylate were added to 100 parts by mass of the aforementioned acrylic polymer syrup 1. The ratio of the solvent-insoluble component of the obtained pressure-sensitive adhesive layer was 73.4% by mass.

(Comparative Example 2-4)

An acrylic pressure-sensitive adhesive composition and a pressure-sensitive adhesive layer sheet were obtained in the same way as in Example 2-1, except that 20 parts by mass of the aforementioned (meth) acrylic polymer 4 and 0.14 parts by mass of trimethylolpropane triacrylate were added to 100 parts by mass of the aforementioned acrylic polymer syrup 2. The ratio of the solvent-insoluble component of the obtained pressure-sensitive adhesive layer was 67.3% by mass.

(Comparative Example 2-5)

An acrylic pressure-sensitive adhesive composition and a pressure-sensitive adhesive layer sheet were obtained in the same way as in Example 2-1, except that 20 parts by mass of Clearon P135 (hydrogenated terpene resin made by YASUHARA CHEMICAL CO.) and 0.20 parts by mass of trimethylolpropane triacrylate were added to 100 parts by mass of the aforementioned acrylic polymer syrup 2. The ratio of the solvent-insoluble component of the obtained pressure-sensitive adhesive layer was 49.1% by mass.

(Comparative Example 2-6)

An acrylic pressure-sensitive adhesive composition and a pressure-sensitive adhesive layer sheet were obtained in the same way as in Example 2-1, except that 0.04 parts by mass of trimethylolpropane triacrylate were added to 100 parts by mass of the aforementioned acrylic polymer syrup 5. The ratio of the solvent-insoluble component of the obtained pressure-sensitive adhesive layer was 67.2% by mass.

(Comparative Example 2-7)

An acrylic pressure-sensitive adhesive composition and a pressure-sensitive adhesive layer sheet were obtained in the same way as in Example 2-1, except that 0.06 parts by mass of trimethylolpropane triacrylate were added to 100 parts by mass of the aforementioned acrylic polymer syrup 6. The ratio of the solvent-insoluble component of the obtained pressure-sensitive adhesive layer was 72.4% by mass.

(Test Method)

[180° Peeling-Off Pressure-Sensitive Adhesive Force Test]

After one of the release liners (polyester films) on the acrylic pressure-sensitive adhesive layer sheet according to each of Examples and Comparative Examples was peeled off, a polyethylene terephthalate film having a thickness of 50 μm was attached. The obtained sheet was cut into a piece having a width of 25 mm, which was used as a test specimen. In addition, a polypropylene plate (part number: 1600, made by Takiron Co. , Ltd.) and an acrylic plate (ACRYLITE, made by Mitsubishi Rayon Co., Ltd.), which had been cleaned with isopropyl alcohol and had a thickness of 2 mm, were prepared. After the release liner (polyester film) on the other surface of the pressure-sensitive adhesive layer sheet was peeled off, the pressure-sensitive adhesive surface of the sheet was attached to the polypropylene plate and acrylic plate by reciprocating a 2-kg roller. After the pressure-sensitive adhesive sheet was attached to each of the polypropylene plate and the acrylic plate, the sample was left uncontrolled under a 40°C-environment for 48 hours and then under a 23°C-environment for 30 minutes (normal state). The pressure-sensitive adhesive force (resistance force) (unit: N/25 mm) of each of the pressure-sensitive adhesive layer sheets under the normal state condition to an adherend was measured by peeling off the other end of the sheet in the 180° peeling-off direction at a speed of 300 mm/min. The case where the pressure-sensitive adhesive force to each of the polypropylene plate and the acrylic plate, occurring under the normal state condition, was larger than or equal to 16 N/25 mm was evaluated as good ("A"), while the case where the pressure-sensitive adhesive force thereto was less than 16 N/25 mm was evaluated as bad. Results of the measurement are shown in Table 6.

[Resistance to Resilience Test]

The pressure-sensitive adhesive layer sheet according to each of Examples and Comparative Examples was cut into a piece having a width of 10 mm and a length of 90 mm, and the piece was attached to a clean aluminum plate having a thickness of 0.5 mm, a width of 10 mm, and a length of 90 mm, which was used as a test specimen. Subsequently, the test specimen was curved so as to have a curvature of R = 50 mm by making the test specimen near to the aluminum plate follow a cylinder. Thereafter, the release liner (polyester film) on the other side of the pressure-sensitive adhesive layer sheet was peeled off, and then the test specimen was laminated onto the aforementioned polypropylene plate. After the test specimen, in the state of being laminated onto the polypropylene plate, was left uncontrolled at room temperature (25°C) for 1 hour, the distance created by pop-off of the pressure-sensitive adhesive layer sheet, i.e., the distance between the surface of the polypropylene plate and the pressure-sensitive adhesive layer (average of the heights at both ends) (unit: mm) was measured. The case where the distance of the pop-off was smaller than or equal to 10 mm was evaluated as good, while the case where the distance thereof was larger than 5 mm was evaluated as bad. Results of the measurement are shown in Table 6. Herein, the values shown in Table 6 are average values with respect to arbitrary multiple points.

[Holding Property Test]

After one of the release liners (polyester films) of the pressure-sensitive adhesive layer sheet according to each of Examples and Comparative Examples was peeled off, a polyethylene terephthalate film having a thickness of 50 μm was attached. The obtained sheet was cut into a piece having a width of 10 mm, which was used as a test specimen. The pressure-sensitive adhesive surface of the test specimen having the area of 10 mm in width x 20 mm in length was attached to a bakelite plate that had been cleaned with toluene, and the test specimen was left uncontrolled under a 60°C-environment for 30 minutes. Thereafter, a weight was hung from one end of the specimen such that a 500-g load was applied in the shear direction, and the specimen, in the state of the weight being hung, was left uncontrolled under a 60°C-environment for 2 hours, thereafter allowing a holding property to be evaluated. The case where the test specimen had not dropped was evaluated as good ("A"), while the case where the test specimen had dropped was evaluated as bad. When the test specimen has not dropped, a slippage distance (mm) was measured. Results of the measurement are shown in Table 6.

[Table 6]

| | PRESSURE-SENSITIVE ADHESIVE FORCE [25 N/mm] | | RESISTANCE TO RESILIENCE [mm] R50 | | HOLDING PROPERTY | | HAZE |
|---|---|---|---|---|---|---|---|
| | PP | ACRYLIC | PP | ACRYLIC | | | |
| | NORMAL STATE | NORMAL STATE | 1H | 1H | 60°C | 60°C (SLIPPAGE DISTANCE mm) | INITIAL STAGE |
| EXAMPLE 2-1 | 16.9 | 22.0 | 0.7 | 0.0 | A | 4.9 | 0.4 |
| EXAMPLE 2-2 | 19.0 | 25.1 | 0.0 | 0.0 | A | 0.1 | 0.7 |
| EXAMPLE 2-3 | 18.4 | 26.5 | 0.5 | 0.0 | A | 2.8 | 0.4 |
| EXAMPLE 2-4 | 16.5 | 21.4 | 1.2 | 0.0 | A | 3.9 | 0.4 |
| EXAMPLE 2-5 | 18.7 | 27.5 | 0.1 | 0.0 | A | 0.3 | 0.5 |
| EXAMPLE 2-6 | 19.0 | 26.8 | 0.3 | 0.0 | A | 0.2 | 0.5 |
| EXAMPLE 2-7 | 18.0 | 23.3 | 4.2 | 0.0 | A | 0.2 | 1.2 |
| EXAMPLE 2-8 | 16.6 | 20.9 | 7.9 | 0.5 | A | 0.1 | 5.2 |
| EXAMPLE 2-9 | 20.8 | 22.5 | 0.8 | 0.3 | A | 0.6 | 8.1 |
| COMPARATIVE EXAMPLE 2-1 | 12.4 | 15.6 | 11.3 | 0.4 | A | 0.5 | 0.3 |
| COMPARATIVE EXAMPLE 2-2 | 11.7 | 20.1 | 11.0 | 0.3 | A | 0.1 | 0.3 |
| COMPARATIVE EXAMPLE 2-3 | 15.4 | 23.3 | 15 | 0.2 | A | 0.1 | 0.4 |
| COMPARATIVE EXAMPLE 2-4 | 15.9 | 24.6 | 3.4 | 0.6 | A | 0.6 | 0.4 |
| COMPARATIVE EXAMPLE 2-5 | 8.9 | 13.9 | 12.4 | 9.8 | A | 0.2 | 71.1 |
| COMPARATIVE EXAMPLE 2-6 | 13.9 | 21.1 | 11.2 | 0.2 | A | 0.3 | 0.5 |
| COMPARATIVE EXAMPLE 2-7 | 12.4 | 20.9 | 3.3 | 0.0 | A | 0.3 | 0.5 |

[Haze Test (Transparency Evaluation)]

After one of the release liners (polyester films) of the pressure-sensitive adhesive layer sheet according to each of Examples and Comparative Examples was peeled off, the pressure-sensitive adhesive surface was attached to slide glass having a thickness of 0.8 mm (part number: S-1111, made by Matsunami Glass Ind., Ltd.). Subsequently, the other release liner (polyester film) of the pressure-sensitive adhesive sheet was peeled off to measure, with a haze meter (made by MURAKAMI COLOR RESEARCH LABORATORY Co., Ltd.), the haze of a structure in which the pressure-sensitive adhesive sheet and the slide glass have been attached together. The case where the haze was smaller than or equal to 10% was evaluated as good, while the case where the haze was more than 10% was evaluated as bad. Results of the measurement are shown in Table 6.

As shown in Table 6, the pressure-sensitive adhesive force of each of Comparative Examples 2-1 to 2-7 to the polypropylene plate was bad. The pressure-sensitive adhesive force of Comparative Example 2-1 and 2-5 to the acrylic plate was also bad. On the other hand, the pressure-sensitive adhesive force of each of Examples 2-1 to 2-9 to each of the polypropylene plate and acrylic plate was good. That is, it has been confirmed that the adhesiveness of each of Examples to an adherend having low polarity was more improved in comparison with those of Comparative Examples

2-1 to 2-7.

The resistance to resilience of Comparative Examples 2-1, 2-2, 2-5, and 2-6 with respect to the polypropylene plate was bad. On the other hand, the resistance to resilience of each of Examples with respect to each of the polypropylene plate and the acrylic plate was good.

Good holding property (cohesive force) was observed in each of Examples and Comparative Examples. Accordingly, it has been confirmed that, in Examples 2-1 to 2-9, excellent pressure-sensitive adhesive force, excellent resistance to resilience, and an excellent holding property were combined.

When the above results are summarized, it has been confirmed that, by containing, as a tackifying resin to be added in the acrylic polymer (F) as a pressure-sensitive adhesive composition, the (meth) acrylic polymer (G) that has a terpene structure in its side chain and that has a weight average molecular weight of 1000 or more and less than 30000, the effect that all of the pressure-sensitive adhesive force to adherends including an adherend having low polarity, resistance to resilience, and a holding property can be made good, the effect having not been achieved before, can be obtained.

## Claims

1. An acrylic pressure-sensitive adhesive tape comprising:

    a core layer; and
    a surface layer provided on one or both surfaces of the core layer, wherein
    the core layer contains an acrylic polymer (A), and wherein
    the surface layer contains 100 parts by mass of an acrylic polymer (B) and 1 to 70 parts by mass of a (meth) acrylic polymer (C) that has a weight average molecular weight of 1000 or more and less than 30000 and that has a terpene skeleton in its side chain.

2. The acrylic pressure-sensitive adhesive tape according to claim 1, wherein
    the core layer further contains a fine particle (D) and/or a bubble (E).

3. The acrylic pressure-sensitive adhesive tape according to claim 1 or claim 2, wherein
    the glass transition temperature of the (meth)acrylic polymer (C) is 0°C or higher to 300°C or lower.

4. The acrylic pressure-sensitive adhesive tape according to any one of claims 1-3, wherein
    the (meth)acrylic polymer (C) contains, in the whole monomers and as a monomer unit, 10% by mass or more to 100% by mass or less of a (meth) acrylic monomer having a terpene skeleton.

5. The acrylic pressure-sensitive adhesive tape according to any one of claims 1-4, wherein
    the acrylic polymer (B) contains, as a monomer unit, at least one type of monomer selected from the group consisting of N-vinyl cyclic amides, represented by the acrylic (1) described in the following general formula, and carboxyl group-containing monomers:

    [Formula 1]

    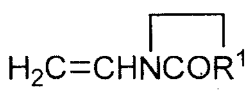 (1)

    wherein, $R^1$ is a divalent organic group.

6. The acrylic pressure-sensitive adhesive tape according to any one of claims 1-4, wherein
    the surface layer contains 40 to 90% by mass of a solvent-insoluble component.

7. An acrylic pressure-sensitive adhesive composition comprising:

    100 parts by mass of an acrylic polymer (A); and
    1 to 70 parts by mass of a (meth) acrylic polymer (B) that has a terpene skeleton in its side chain and that has a weight average molecular weight of 1000 or more and less than 30000.

8. The acrylic pressure-sensitive adhesive composition according to claim 7, wherein the glass transition temperature of the (meth)acrylic polymer (B) is 0°C or higher to 300°C or lower.

9. The acrylic pressure-sensitive adhesive composition according to claim 7 or claim 8, wherein the (meth)acrylic polymer (B) contains, in the whole monomers and as a monomer unit, 10% by mass or more to 100% by mass or less of a (meth) acrylic monomer having a terpene skeleton.

10. The acrylic pressure-sensitive adhesive composition according to any one of claims 7-9, wherein the acrylic polymer (A) contains, as a monomer unit, at least one type of monomer selected from the group consisting of N-vinyl cyclic amides, represented by the acrylic (1) described in the following general formula, and carboxyl group-containing monomers:

[Formula 2]

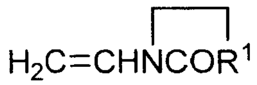

(1)

wherein, $R^1$ is a divalent organic group.

11. An acrylic pressure-sensitive adhesive layer made of the acrylic pressure-sensitive adhesive composition according to any one of claims 7-10.

12. The acrylic pressure-sensitive adhesive layer according to claim 11 containing 40 to 90% by mass of a solvent-insoluble component.

13. An acrylic pressure-sensitive adhesive tape containing the acrylic pressure-sensitive adhesive layer according to claim 11 or claim12.

**Patentansprüche**

1. Ein druckempfindliches Acrylklebeband, umfassend:

   eine Kernschicht; und
   eine Oberflächenschicht, die auf einer oder beiden Oberflächen der Kernschicht zur Verfügung gestellt wird, worin
   die Kernschicht ein Acrylpolymer (A) enthält, und worin die Oberflächenschicht 100 Masseteile eines Acrylpolymers (B) und 1 bis 70 Masseteile eines (Meth)acrylpolymers (C) enthält, welches ein gewichtsmittleres Molekulargewicht von 1000 oder mehr und weniger als 30000 aufweist und welches ein Terpengerüst in seiner Seitenkette hat.

2. Das druckempfindliche Acrylklebeband gemäß Anspruch 1, worin die Kernschicht weiterhin feine Partikel (D) und/oder Blasen (E) enthält.

3. Das druckempfindliche Acrylklebeband gemäß Anspruch 1 oder Anspruch 2, worin die Glasübergangstemperatur des (Meth)acrylpolymers (C) 0 °C oder höher bis zu 300 °C oder niedriger ist.

4. Das druckempfindliche Acrylklebeband gemäß einem der Ansprüche 1 bis 3, worin das (Meth)acrylpolymer (C) in den gesamten Monomeren und als eine Monomereinheit 10 Massen-% oder mehr bis zu 100 Massen-% oder weniger eines (Meth)acrylmonomers mit einem Terpengerüst enthält.

5. Das druckempfindliche Acrylklebeband gemäß einem der Ansprüche 1 bis 4, worin das Acrylpolymer (B) als eine Monomereinheit mindestens eine Art eines Monomers, ausgewählt aus der Gruppe bestehend aus N-Vinyl-cyclischen Amiden, dargestellt durch das Acrylat (1), das durch die folgende allgemeine Formel beschrieben wird, und Carboxylgruppen-enthaltenden Monomeren, enthält:

[Formel 1]

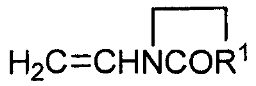 (1)

worin $R^1$ eine divalente organische Gruppe ist.

6. Das druckempfindliche Acrylklebeband gemäß einem der Ansprüche 1 bis 4, worin die Oberflächenschicht 40 bis 90 Massen-% einer in Lösungsmitteln unlöslichen Komponente enthält.

7. Druckempfindliche Acrylklebezusammensetzung, umfassend:

100 Gewichtsteile eines Acrylpolymers (A); und
1 bis 70 Massenteile eines (Meth)acrylpolymers (B), welches ein Terpengerüst in seiner Seitenkette aufweist, und welches ein gewichtsmittleres Molekulargewicht von 1000 oder mehr und weniger als 30000 hat.

8. Die druckempfindliche Acrylklebezusammensetzung gemäß Anspruch 7, worin die Glasübergangstemperatur des (Meth)acrylpolymers (B) 0 °C oder höher bis zu 300 °C oder weniger beträgt.

9. Die druckempfindliche Acrylklebezusammensetzung gemäß Anspruch 7 oder Anspruch 8, worin das (Meth)acrylpolymer (B) in den gesamten Monomeren und als eine Monomereinheit, 10 Massen-% oder mehr bis zu 100 Massen-% oder weniger eines (Meth)acrylmonomers mit einem Terpengerüst enthält.

10. Die druckempfindliche Acrylklebezusammensetzung gemäß einem der Ansprüche 7 bis 9, worin das Acrylpolymer (A) als eine Monomereinheit mindestens eine Art eines Monomers, ausgewählt aus der Gruppe bestehend aus N-Vinyl-cyclischen Amiden, dargestellt durch das Acrylat (1), das durch die folgende allgemeine Formel beschrieben wird, und Carboxylgruppen-enthaltenden Monomeren, enthält:

[Formel 2]

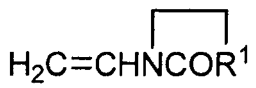 (1)

worin $R^1$ eine divalente organische Gruppe ist.

11. Druckempfindliche Acrylklebeschicht, hergestellt aus der druckempfindlichen Acrylklebezusammensetzung gemäß einem der Ansprüche 7 bis 10.

12. Die druckempfindliche Acrylklebeschicht gemäß Anspruch 11, enthaltend 40 bis 90 Massen-% einer in Lösungsmitteln unlöslichen Komponente.

13. Druckempfindliches Acrylklebeband, enthaltend die druckempfindliche Acrylklebeschicht gemäß Anspruch 11 oder Anspruch 12.

## Revendications

1. Bande adhésive sensible à la pression acrylique comprenant :

une couche de noyau ; et
une couche de surface fournie sur une ou les deux surfaces de la couche de noyau, dans laquelle
la couche de noyau contient un polymère acrylique (A), et dans laquelle
la couche de surface contient 100 parties en masse d'un polymère acrylique (B) et de 1 à 70 parties en masse d'un polymère (méth)acrylique (C) qui présente une masse moléculaire moyenne en masse de 1 000 ou supérieure et inférieure à 30 000 et qui présente un squelette terpène dans sa chaîne latérale.

2. Bande adhésive sensible à la pression acrylique selon la revendication 1, dans laquelle la couche de noyau contient de plus une fine particule (D) et/ou une bulle (E).

3. Bande adhésive sensible à la pression acrylique selon la revendication 1 ou la revendication 2, dans laquelle la température de transition vitreuse du polymère (méth)acrylique (C) est de 0°C ou supérieure à 300°C ou inférieure.

4. Bande adhésive sensible à la pression acrylique selon l'une quelconque des revendications 1-3, dans laquelle le polymère (méth)acrylique (C) contient, dans tous les monomères et comme unité monomère, 10 % en masse ou plus à 100 % en masse ou moins d'un monomère (méth)acrylique présentant un squelette terpène.

5. Bande adhésive sensible à la pression acrylique selon l'une quelconque des revendications 1-4, dans laquelle le polymère acrylique (B) contient, comme unité monomère, au moins un type de monomère choisi dans le groupe constitué d'amides cycliques de N-vinyle, représentés par l'acrylique (1) décrit dans la formule générale suivante, et des monomères contenant un groupe carboxyle :

[Formule 1]

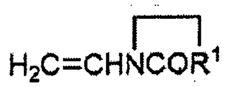 (1)

dans laquelle, $R^1$ est un groupe organique divalent.

6. Bande adhésive sensible à la pression acrylique selon l'une quelconque des revendications 1-4, dans laquelle la couche de surface contient de 40 à 90 % en masse d'un constituant insoluble dans un solvant.

7. Composition adhésive sensible à la pression acrylique comprenant :

100 parties en masse d'un polymère acrylique (A) ; et
de 1 à 70 parties en masse d'un polymère (méth)acrylique (B) qui présente un squelette terpène dans sa chaîne latérale et qui présente une masse moléculaire moyenne en masse de 1 000 ou supérieure et inférieure à 30 000.

8. Composition adhésive sensible à la pression acrylique selon la revendication 7, dans laquelle la température de transition vitreuse du polymère (méth)acrylique (B) est de 0°C ou supérieure à 300°C ou inférieure.

9. Composition adhésive sensible à la pression acrylique selon la revendication 7 ou la revendication 8, dans laquelle le polymère (méth)acrylique (B) contient, dans tous les monomères et comme unité monomère, 10 % en masse ou plus à 100 % en masse ou moins d'un monomère (méth)acrylique présentant un squelette terpène.

10. Composition adhésive sensible à la pression acrylique selon l'une quelconque des revendications 7-9, dans laquelle le polymère acrylique (A) contient, comme unité monomère, au moins un type de monomère choisi dans le groupe constitué d'amides cycliques de N-vinyle, représentés par l'acrylique (1) décrit dans la formule générale suivante, et des monomères contenant un groupe carboxyle :

[Formule 2]

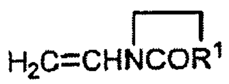 (1)

dans laquelle, $R^1$ est un groupe organique divalent.

11. Couche adhésive sensible à la pression acrylique constituée de la composition adhésive sensible à la pression acrylique selon l'une quelconque des revendications 7-10.

12. Couche adhésive sensible à la pression acrylique selon la revendication 11 contenant de 40 à 90 % en masse d'un

constituant insoluble dans un solvant.

**13.** Bande adhésive sensible à la pression acrylique contenant la couche adhésive sensible à la pression acrylique selon la revendication 11 ou la revendication 12.

FIG.1

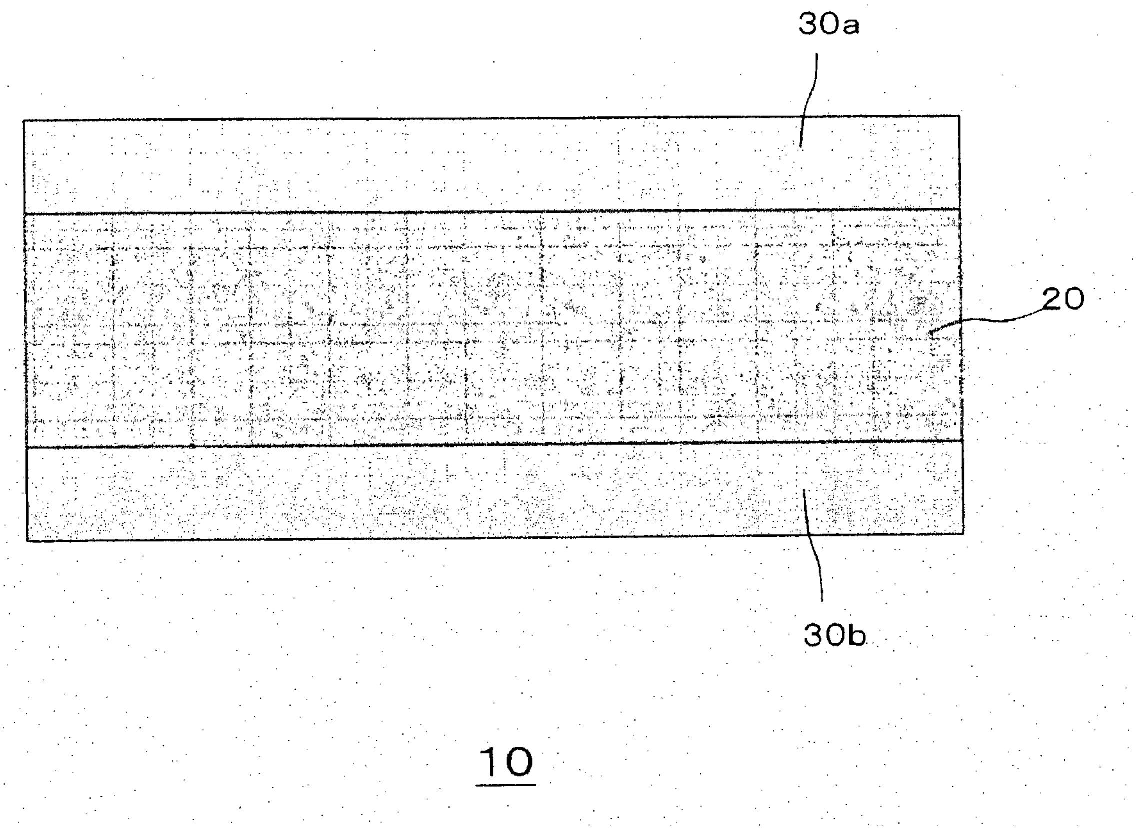

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6207151 A
- JP 1999504054 PCT


### Non-patent literature cited in the description


- Polymer Handbook. John Wiley & Sons, Inc, 1989